# EUROPEAN PATENT SPECIFICATION

(11) **EP 3 563 301 B1**
(45) Date of publication and mention of the grant of the patent: **03.12.2025**
(21) Application number: 17784125.1
(22) Date of filing: 28.09.2017
(51) Int. Cl.: G06N 3/00, G05B 13/02

(54) **MACHINE-LEARNED VIRTUAL SENSOR MODEL FOR MULTIPLE SENSORS**
MASCHINENGELERNTES VIRTUELLES SENSORMODELL FÜR MEHRERE SENSOREN
MODÈLE DE CAPTEUR VIRTUEL APPRIS PAR MACHINE POUR DE MULTIPLES CAPTEURS

(30) Priority: 29.12.2016 US 201615393322
(43) Date of publication of application: 06.11.2019
(73) Proprietor: Google LLC, Mountain View, CA 94043 (US)
(72) Inventor: CALVO, Marcos, Mountain View, California 94043 (US); CARBUNE, Victor, Mountain View, California 94043 (US); GONNET ANDERS, Pedro, Mountain View, California 94043 (US); DESELAERS, Thomas, Mountain View, California 94043 (US)
(74) Representative: Marks & Clerk GST
(86) International application number: PCT/US2017/053922
(87) International publication number: WO 2018/125346

(56) References cited:
- WO-A1-2016/039921
- WO-A1-2016/156236
- US-A1- 2012 023 062
- US-A1- 2013 024 416
- US-A1- 2014 012 791

## Description

### FIELD

The present disclosure relates generally to machine-learned virtual sensor models. More particularly, the present disclosure relates to deep machine learning to refine and/or predict sensor outputs for multiple sensors.

### BACKGROUND

Mobile computing devices (e.g., smartphones) are increasingly equipped with a number of specialized sensors. For example, image sensors can be provided to capture images, location sensors can be provided to determine device location, touch sensors can receive user input, motion sensors can be provided to detect movement, etc. The outputs of such sensors can be used in a variety of manners to facilitate user interaction with the mobile computing device and interaction with applications running on the mobile computing device.

The complexity of processing sensor data introduces the issue of "sensor latency," in which a delay occurs between when a sensed event occurs and when a computing device appears to respond to the sensed event. Sensor latency can be a significant challenge that impacts device performance and user satisfaction. In particular, sensor latency is a performance parameter that can be highly visible to users and cause significant problems for the user.

Potential concerns related to the accuracy and timeliness of sensor data can be compounded when processing sensor data received from multiple sensors. Most sensors typically work independently and produce their own sensor readings at their own frequencies, which can make it difficult for some applications to fuse a set of sensors efficiently. Some sensors also don't provide their readings in as timely a fashion as other sensors or as needed for some applications. For instance, virtual reality (VR) applications can be sensitive to delays and inaccuracies in processing sensor data.
WO 2016/039921 proposes systems and methods for predicting a future orientation of a device, A future motion sensor sample may be predicted using a plurality of motion sensor samples for the device up to a current time. After determining the current orientation of the device, the predicted motion sensor sample may be used to predict a future orientation of the device at one or more times. US 2013/024416 proposes A method for determining the future operational condition of an object includes obtaining reference data that indicates the normal operational state of the object, and obtaining input pattern arrays. Each input pattern array has a plurality of input vectors, while each input vector represents a time point and has input values representing a plurality of parameters indicating the current condition of the object. At least one processor generates estimate values based on a calculation that uses an input pattern array and the reference data to determine a similarity measure between the input values and reference data. The estimate values, in the form of an estimate matrix, include at least one estimate vector of inferred estimate values, and represents at least one time point that is not represented by the input vectors. The inferred estimate values are used to determine a future condition of the object. WO 2016/156236 proposes a method comprising capturing current and past data frames of a vehicle scenery with an automotive imaging sensor, and predicting, by means of a recurrent neural network, the future position of a moving object in the vehicle scenery based on the current and past data frames. US 2012/0023062 proposes methods and systems for developing decision information relating to a single system based on data received from a plurality of sensors. The method includes receiving first data from a first sensor that defines first information of a first type that is related to a system, receiving second data from a second sensor that defines second information of a second type that is related to said system, wherein the first type is different from the second type, generating a first decision model, a second decision model, and a third decision model, determining whether data is available from only the first sensor, only the second sensor, or both the first and second sensors, and selecting based on the determination of availability an additional model to apply the available data, wherein the additional model is selected from a plurality of additional decision models including the third decision model.

### SUMMARY

Aspects and advantages of embodiments of the present disclosure will be set forth in part in the following description, or can be learned from the description, or can be learned through practice of the embodiments. The invention is defined by the independent claims. Further aspects of the invention are outlined in the dependent claims.

An example aspect of the present disclosure is directed to a computing device that determines one or more refined sensor output values from multiple sensor inputs. The computing device includes at least one processor and at least one computer-readable medium (which may be a tangible, non-transitory computer-readable medium although this example aspect is not limited to this) that stores instructions that, when executed by the at least one processor, cause the at least one processor to perform operations. The operations include obtaining data descriptive of a machine-learned sensor output refinement model. The machine-learned sensor output refinement model has been trained to receive sensor data from multiple sensors, the sensor data from each sensor indicative of one or more measured parameters in the sensor's physical environment, recognize correlations among sensor outputs of the multiple sensors, and in response to receipt of the sensor data from multiple sensors, output one or more refined sensor output values. The operations also include obtaining the sensor data from the multiple sensors, the sensor data descriptive of one or more measured parameters in each sensor's physical environment. Obtaining the sensor data from the multiple sensors comprises iteratively obtaining a time-stepped sequence of T sensor data vectors for N different sensors such that each of the T sensor data vectors has N dimensions, each dimension corresponding to sensor data for one of the N different sensors. The operations also include inputting the sensor data into machine-learned sensor output refinement model. Inputting the sensor data into the sensor output refinement model comprises iteratively inputting each of the plurality of sensor data vectors into the sensor output refinement model as they are iteratively obtained. The operations also include receiving, as an output of the machine-learned sensor output refinement model, a sensor output refinement vector that describes the one or more refined sensor outputs for two or more of the multiple sensors respectively, the refined sensor output values being refined values for the obtained sensor data and providing improved measures, relative to the original sensor data, of the one or more measured parameters. Receiving, as an output of the sensor output refinement model, a sensor output refinement vector comprises iteratively receiving a plurality of sensor output refinement vectors as outputs of the sensor output refinement model, wherein each sensor output refinement vector is for M different sensors such that each of the sensor output refinement vectors has M dimensions, each dimension corresponding to a refined sensor output value for one of the M different sensors.

Another example aspect of the present disclosure is directed to a method that includes obtaining data descriptive of a machine-learned model sensor output refinement model. The sensor output refinement model has been trained to receive sensor data from multiple sensors, the sensor data from each sensor indicative of one or more measured parameters in the sensor's physical environment, recognize correlations among sensor outputs of the multiple sensors, and in response to receipt of the sensor data from multiple sensors, output one or more refined sensor output values The operations also include obtaining sensor data from multiple sensors, the sensor data descriptive of one or more measured parameters in each sensor's physical environment. Obtaining the sensor data from the multiple sensors comprises iteratively obtaining a time-stepped sequence of T sensor data vectors for N different sensors such that each of the T sensor data vectors has N dimensions, each dimension corresponding to sensor data for one of the N different sensors. The operations also include inputting the sensor data into the sensor output refinement model. Inputting the sensor data into the sensor output refinement model comprises iteratively inputting each of the plurality of sensor data vectors into the sensor output refinement model as they are iteratively obtained. The operations also include receiving, as an output of the sensor output refinement model, a sensor output refinement vector that describes respective refined sensor output values for the multiple sensors, the refined sensor output values being refined values for the obtained sensor data and providing improved measures, relative to the original sensor data, of the one or more measured parameters. Receiving, as an output of the sensor output refinement model, a sensor output refinement vector comprises iteratively receiving a plurality of sensor output refinement vectors as outputs of the sensor output refinement model, wherein each sensor output refinement vector is for M different sensors such that each of the sensor output refinement vectors has M dimensions, each dimension corresponding to a refined sensor output value for one of the M different sensors.

In an implementation the method also includes providing one or more of the sensor output values of the sensor output vector to an application via an application programming interface (API).

Other aspects of the present disclosure are directed to various corresponding systems, apparatuses, computer-readable media (including without limitation non-transitory computer-readable media), user interfaces, electronic devices, and methods. For example, a further example aspect is directed to a sensor output estimation device (also referred to herein as a "virtual sensor") that determines one or more refined sensor outputs from multiple sensors. The virtual sensor includes at least one processor. The virtual sensor also includes a machine-learned sensor output refinement model. The sensor output prediction model has been trained to receive sensor data from multiple sensors, the sensor data from each sensor indicative of one or more measured parameters in the sensor's physical environment. In response to receipt of the sensor data from the multiple sensors, the sensor output prediction model has been trained to output one or more refined sensor outputs. The virtual sensor also includes at least one computer-readable medium (which may be a tangible, non-transitory medium, although this example aspect is not limited to this) that stores instructions that, when executed by the at least one processor, cause the at least one processor to obtain the sensor data from the multiple sensors, the sensor data descriptive of one or more measured parameters in each sensor's physical environment. The instructions further cause the at least one processor to input the sensor data into the sensor output refinement model. The instructions further cause the at least one processor to receive, as an output of the sensor output refinement model, a sensor output refinement vector that describes the one or more refinement sensor outputs for two or more of the multiple sensors respectively.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which refers to the appended figures, in which:
Figure 1 depicts a block diagram of an example computing system that performs machine learning to implement a virtual sensor according to example embodiments of the present disclosure;
Figure 2 depicts a block diagram of a first example computing device that performs machine learning according to example embodiments of the present disclosure;
Figure 3 depicts a block diagram of a second example computing device that performs machine learning according to example embodiments of the present disclosure;
Figure 4 depicts a first example model arrangement according to example embodiments of the present disclosure;
Figure 5 depicts a second example model arrangement according to example embodiments of the present disclosure;
Figure 6 depicts a third example model arrangement according to example embodiments of the present disclosure;
Figure 7 depicts a fourth example model arrangement according to example embodiments of the present disclosure;
Figure 8 depicts a flow chart diagram of an example method to perform machine learning according to example embodiments of the present disclosure
Figure 9 depicts a flow chart diagram of a first additional aspect of an example method to perform machine learning according to example embodiments of the present disclosure;
Figure 10 depicts a flow chart diagram of a second additional aspect of an example method to perform machine learning according to example embodiments of the present disclosure;
Figure 11 depicts a flow chart diagram of a first training method for a machine-learned model according to example embodiments of the present disclosure; and
Figure 12 depicts a flow chart diagram of a second training method for a machine-learned model according to example embodiments of the present disclosure.

### DETAILED DESCRIPTION

### Overview

Generally, the present disclosure is directed to systems and methods that leverage machine learning to holistically refine and/or predict sensor output values for multiple sensors. In particular, the systems and methods of the present disclosure can include and use a machine-learned virtual sensor model that can be trained to receive sensor data from multiple sensors and, in response to receipt of the sensor data, output one or more refined sensor output values and/or one or more predicted future sensor output values. The virtual sensor model can output the one or more refined sensor output values and/or the one or more predicted future sensor output values for some or all of the multiple sensors. The refined sensor output values can be improved relative to the original sensor data. In particular, the virtual sensor model can leverage correlations or other relationships among sensors and their data that the virtual sensor model has learned to improve or otherwise refine the input sensor data, thereby enabling applications or components that consume the sensor data to provide more accurate and/or precise responses to the sensor data. According to another aspect, in addition or alternatively to providing the refined sensor values, the virtual sensor model can output one or more predicted future sensor output values that represent predictions of future sensor readings. Given the predicted future sensor output values, applications or other components that consume data from the multiple sensors are not required to wait for the actual sensor output values to occur. Thus, the predicted future sensor output values can improve the responsiveness and reduce the latency of applications or other components that utilize data from the multiple sensors. For example, mobile devices, virtual reality (VR) applications, vehicle control systems and the like can benefit from the availability of the predicted future sensor output values. In addition, refined sensor output values and/or predicted future sensor output values can help improve and synchronize output values across multiple sensors regardless of independent refresh frequencies, which can sometimes vary across different sensors. Output values from the virtual sensor model also can include confidence values for the predicted and/or refined sensor values. These confidence values can also be used by an application that uses the predicted and/or refined sensor output values.

In particular, according to an aspect of the present disclosure, in some implementations, a user computing device (e.g., a mobile computing device such as a smartphone) can obtain sensor data from multiple sensors. The sensor data can be indicative of one or more measured parameters in a sensor's physical environment. Sensors can include, but are not limited to, a motion sensor, an accelerometer, a gyroscope, an orientation sensor, a magnetic field sensor, an audio sensor (e.g., microphone), an image sensor (e.g., camera), a linear acceleration sensor, a gravity sensor, a rotation vector sensor, a magnetometer, a location sensor (e.g., GPS), an inertial motion unit, an odometer, a barometer, a thermometer, a hygrometer, a touch-sensitive sensor, a fingerprint sensor, a proximity sensor, any combination of such sensors and others, etc. The computing device can input the sensor data from the multiple sensors into the machine-learned virtual sensor model and receive a virtual sensor output vector that includes refined sensor outputs and/or predicted future sensor outputs for one or more of the multiple sensors as an output of the machine-learned virtual sensor model. The computing device can perform one or more actions associated with the sensor outputs of the virtual sensor output vector.

In some examples, the virtual sensor model can be a sensor output refinement model. In such instances, the sensor output refinement model can be trained to receive sensor data from multiple sensors and, in response to receipt of the sensor data from multiple sensors, output one or more refined sensor output values. As an example, when sensor data from multiple sensors is provided as input to a trained sensor output refinement model, a sensor output refinement vector can be received as an output of the sensor output refinement model. The sensor output refinement vector can describe one or more refined sensor outputs for one or more of the multiple sensors respectively.

Refined sensor outputs generated in accordance with the disclosed techniques can provide improvements relative to original sensor data by holistically leveraging the fact that the sum of multiple sensor measurements can typically be better than each sensor measurement considered individually. For example, a first motion sensor (e.g., an accelerometer) and a second motion sensor (e.g., a gyroscope) may both register a change in state when a device including such sensors is subjected to movement. The sensor output refinement model can first learn and then leverage the correlation between such sensors to help improve currently sampled sensor output values. For instance, the accelerometer readings can be used to help improve the gyroscope readings and the gyroscope readings can be used to help improve the accelerometer readings. **In** some implementations, the sensor output refinement model can learn nuanced and complex correlations or inter-dependencies between a significant number of sensors (e.g., more than two as provided in the example above) and can holistically apply such learned correlations to improve or otherwise refine the sensor outputs for some or all of such significant number of sensors. Sensor correlation can also help the sensor output refinement model to identify and manage sensor data outliers that may arise from noisy and/or faulty measurement at certain instances of time.

In some examples, the virtual sensor model can be a sensor output prediction model. In such instances, the sensor output prediction model can be trained to receive sensor data from multiple sensors and, in response to receipt of the sensor data from multiple sensors, output one or more predicted future sensor outputs. As an example, when sensor data from multiple sensors is provided as input to a trained sensor output prediction model, a sensor output prediction vector can be received as an output of the sensor output prediction model. The sensor output prediction vector can describe one or more predicted future sensor outputs for one or more of the multiple sensors for one or more future times. For instance, the sensor output prediction vector can be a prediction of what each sensor will likely read in the next time step or, for example, the next three time steps. In some examples, an additional time input can be provided to the sensor output prediction model to specify the one or more particular future times for which predicted future sensor outputs are to be generated. The sensor output prediction model can also be trained to determine and provide as output a learned confidence measure for each of the predicted future sensor outputs.

In some examples, a virtual sensor model can be trained and configured to operate for both sensor refinement and prediction simultaneously. For instance, a virtual sensor model can be trained to receive sensor data from multiple sensors and, in response to receipt of the sensor data from multiple sensors, output one or more sensor output refinement values and one or more sensor output prediction values. In some examples, the one or more sensor output refinement values can be provided in the form of a sensor output refinement vector that includes refined sensor output values for multiple sensors. In some examples, the one or more sensor output prediction values can be provided in the form of one or more sensor output prediction vectors that include predicted future sensor output values for multiple sensors at one or more different time steps.

According to another aspect of the present disclosure, the virtual sensor model can be trained in accordance with one or more machine learning techniques, including but not limited to neural network based configurations or other regression based algorithms or configurations. In some implementations the virtual sensor model can include a neural network. In such instances, a neural network within the virtual sensor model can be a recurrent neural network. In some examples, a neural network within the virtual sensor model can be a long short-term memory (LSTM) neural network, a gated recurrent unit (GRU) neural network, or other forms of recurrent neural networks.

According to another aspect of the present disclosure, in some implementations, the virtual sensor model can be a temporal model that allows the sensor data to be referenced in time. In such instances, the sensor data provided as input to a virtual sensor model can be a sequence of T inputs, each input corresponding to sensor data obtained at a different time step (or "time-stepped sequence"). For instance, a time-stepped sequence of sensor data from multiple sensors can be obtained iteratively. Consider sensor data obtained from N different sensors that is iteratively obtained at T different sample times (e.g., t₁, t₂, ..., t_{T}). In such example, a N-dimensional sensor data vector providing a sensor reading for each of the N different sensors is obtained for each of the T different times. Each of these sensor data vectors can be iteratively provided as input to a neural network of the virtual sensor model as it is iteratively obtained. In some examples, the time difference between each two adjacent sample times of the T different sample times (e.g., t₁, t₂, ..., t_{T}) can be the same or it can be different.

According to another aspect of the present disclosure, in some implementations, a virtual sensor output vector generated in response to receipt of each sensor data vector can include a M-dimensional virtual sensor output vector. In some examples, the M-dimensional virtual sensor output vector has a same number of dimensions as the N-dimensional sensor data vector (e.g., M=N) such that a refined and/or predicted value can be determined for each sensor that was sampled and whose sensor data was provided as input to the virtual sensor model. In some examples, the number of dimensions (N) of the sensor data vector can be less than the number of dimensions (M) of the virtual sensor output vector (e.g., N<M). This could be the case if the sampled sensor data from one or more sensors was used to refine those values as well as predict a value for a different non-sampled sensor. In some examples, the number of dimensions (N) of the sensor data vector can be greater than the number of dimensions (M) of the virtual sensor output vector (e.g., N>M). This could be the case if the sampled sensor data from one or more sensors was used to refine and/or predict a value for only a subset of sampled sensor(s) that are of particular importance for a particular application or for which a particular application has permission to access.

According to another aspect of the present disclosure, in some implementations, a virtual sensor model can provide synchronized and/or interpolated sensor output values for multiple sensors to enhance the sampling rate of such sensors. Synchronized sensor output values can be output by a virtual sensor model by receiving sensor data from multiple sensors, wherein sensor data from at least some of the multiple sensors is more recently detected than others. Virtual sensor outputs can translate the more recently detected sensor outputs to predict updated values for other sensor outputs based on the learned correlations and other relationships among the multiple sensors. For example, if a virtual sensor model receives sensor data for a first set of sensors that are updated at a current time and sensor data for a second set of sensors that were updated less recently, a virtual sensor output vector can leverage learned correlations among the first and second sets of sensors to provide synchronized sensor output values for some or all of the first and second sets of sensors at a same time. In some implementations, the synchronized sensor output values are provided for the current time (t). In some implementations, the synchronized sensor output values are provided for a future time (e.g., t+1). Interpolated sensor output values can be determined by receiving sensor data readings from multiple sensors at first and second times (e.g., t and t+2). Learned correlations among multiple sensors can be holistically leveraged by the virtual sensor model to interpolate a sensor output value for an intermediate time (e.g., t+1) between the first time (t) and the second time (t+2).

According to another aspect of the present disclosure, the virtual sensor models described herein can be trained on ground-truth sensor data using a determined loss function. More particularly, a training computing system can train the virtual sensor models using a training dataset that includes a number of sets of ground-truth sensor data for multiple sensors. For example, the training dataset can include sensor data that describes a large number of previously-observed sensor outputs for multiple sensors. In some implementations, to train the virtual sensor model, a first portion of a set of ground-truth sensor data can be input into the virtual sensor model to be trained. In response to receipt of such first portion, the virtual sensor model outputs a virtual sensor output vector that predicts the remainder of the set of ground-truth sensor data.

After such prediction, the training computing system can apply or otherwise determine a loss function that compares the virtual sensor output vector generated by the virtual sensor model to a second portion (e.g., the remainder) of the ground-truth sensor data which the virtual sensor model attempted to predict. The training computing system can backpropagate (e.g., by performing truncated backpropagation through time) the loss function through the virtual sensor model to train the virtual sensor model (e.g, by modifying one or more weights associated with the virtual sensor model).

In some implementations, the above-described training techniques can be used to train a sensor output prediction model and/or a sensor output prediction portion of a virtual sensor model that is configured to provide both refined sensor output values and predicted future sensor output values. In some implementations, additional training techniques can be employed to train a sensor output refinement model and/or a sensor output refinement portion of a virtual sensor model that is configured to provide both refined sensor output values and predicted future sensor output values.

In some implementations, a training computing system can further train a virtual sensor model using a training dataset that includes a number of sets of ground-truth sensor data for multiple sensors. For example, the training dataset can include sensor data that describes a large number of previously-observed sensor outputs for multiple sensors. In some implementations, noise can be added to a first portion of the ground-truth sensor data (e.g., by adding a generated random noise signal to the first portion of ground-truth sensor data). The resultant noisy first portion of sensor data can be provided as input to the virtual sensor model to be trained. In response to receipt of such noisy first portion of sensor data, the virtual sensor model outputs a virtual sensor output vector that predicts the second portion (e.g., the remainder) of the set of ground-truth sensor data.

After such prediction, the training computing system can apply or otherwise determine a loss function that compares the virtual sensor output vector generated by the virtual sensor model to a second portion (e.g., the remainder) of the ground-truth sensor data which the virtual sensor model attempted to predict. The training computing system can backpropagate the loss function through the virtual sensor model to train the virtual sensor model (e.g, by modifying one or more weights associated with the virtual sensor model).

According to another aspect of the present disclosure, in some implementations, a virtual sensor model or at least a portion thereof can be made available via an application programming interface (API) for one or more applications provided on a computing device. In some instances, an application uses an API to request refined sensor output values and/or predicted future sensor output values from a virtual sensor model as described herein. Refined sensor output values and/or predicted future sensor output values can be received via the API in response to the request. One or more actions associated with the one or more refined sensor output values and/or predicted future sensor output values can be performed by the application. In some examples, a determination can be made as to which sensors the application has permission to access. For instance, a computing device can be configured such that a particular application has permission to access an audio sensor (e.g., a microphone) but not a location sensor (e.g., a GPS). A virtual sensor output vector made available to the application via the API then can be configured to include refined and/or predicted sensor output values only for the one or more sensors for which the application has permission to access (e.g., an authorized set of sensors).

One or more aspects of the present disclosure can be employed in a variety of applications. In one example application, the disclosed technology can be used to improve responsiveness within a virtual reality system. The virtual reality system can include one or more interface devices including a wearable display device (e.g., head-mounted display device), joystick, wand, data glove, touch-screen device, or other devices including multiple sensors as described herein. In a virtual reality system application, the multiple sensors for which sensor data is obtained can include multiple motion sensors or other sensors. A virtual sensor output vector generated by the virtual sensor model in response to receipt of the sensor data from the multiple motion sensors can include one or more predicted future sensor output values for the multiple motion sensors. These predicted values can be used to help improve a virtual reality application, for example, by being more responsive to user inputs (that are measured by the various sensors), thus being able to react to sensor readings quicker and sometimes in advance.

In another example application, the disclosed technology can be used to improve responsiveness within a mobile computing device (e.g., a smart phone, wearable computing device (e.g., smart watch), tablet, laptop, etc.) In a mobile computing device application, the multiple sensors for which sensor data is obtained can include multiple sensors housed within the mobile computing device. A virtual sensor output vector generated by the virtual sensor model in response to receipt of the sensor data from the multiple sensors can include one or more refined sensor output values and/or predicted future sensor output values for the multiple sensors. These refined and/or predicted values can be used to help improve operating a mobile computing device. For instance, one or more components of the mobile computing device can be activated based at least in part from one or more predicted future sensor output values. In one example, a keyboard application on a mobile computing device could be activated based at least in part from predicted future sensor output values that indicate that a user is about to write something, thereby reducing latency for input to the mobile computing device. In another example, the mobile computing device can be powered on or switched from a passive operating mode to an active operating mode when predicted future sensor output values indicate that the mobile computing device will change positions in response to user interaction (e.g., a user has picked up his phone or taken it out of his pocket).

In another example application, the disclosed technology can be used to improve responsiveness in a transportation application (e.g., automotive and/or aircraft applications). In a transportation application, the multiple sensors from which sensor data can be obtained correspond to vehicle sensors located in a vehicle (e.g., car, truck, bus, aircraft, etc.) A virtual sensor output vector generated by the virtual sensor model in response to receipt of the vehicle sensor data can include one or more refined sensor output values and/or predicted future sensor output values for the multiple vehicle sensors. These refined and/or predicted values can be used to help improve operating the vehicle. For instance, an anti-lock braking system can be more quickly activated in response to predicted future sensor data from a braking sensor and an accelerometer that indicates a significant reduction in vehicle trajectory.

The systems and methods described herein may provide a number of technical effects and benefits. For instance, the disclosed techniques can improve sensor output values (e.g., by determining refined sensor output values and/or predicted future sensor output values) by holistically leveraging correlations among multiple sensors. Machine-learned models can be trained to learn such correlations so that sensor data provided as input to the machine-learned models can result in outputs that offer refinements or future predictions based in part on such learned correlations. For example, sensor correlations among one or more motion sensors (e.g., a gyroscope and an accelerometer) can be learned and then leveraged to refine and/or predict sensor output values since an accelerometer will likely measure some movement if the gyroscope does and vice versa. Similarly, a proximity sensor and a magnetic compass may likely have output values describing a change in state when there is some movement. The view of an image sensor (e.g., a camera) in a mobile computing device can be predicted to change when there is a change in the motion of a mobile computing device itself. Sensor refinements can provide an improved version of sensor data (e.g., using an accelerometer to improve a gyroscope reading and vice versa). Sensor predictions can provide an estimate of what a sensor will likely read in one or more future time steps. By holistically training a machine-learned model to recognize correlations across multiple sensors, improvements to sensor refinements and sensor predictions can be achieved relative to conventional systems that retrieve independently operating sensor outputs in isolation from one another.

Another example technical effect and benefit of the present disclosure is improved scalability. In particular, modeling sensor data through machine-learned models such as neural networks greatly reduces the research time needed relative to development of a hand-crafted virtual sensor algorithm. For example, for hand-crafted virtual sensor algorithms, a designer would need to exhaustively derive heuristic models of how different sensors interact in different scenarios, including different combinations of available sensors, different sensor frequencies, and the like. By contrast, to use machine-learned models as described herein, a network can be trained on appropriate training data, which can be done at a massive scale if the training system permits. In addition, the machine-learned models can easily be revised as new training data is made available. Still further, by using machine-learned models to automatically determine interaction and correlation across multiple sensors in potentially different applications and at potentially different frequencies, the amount of effort required to identify and exploit such interactions between sensors can be significantly reduced.

The systems and methods described herein may also provide a technical effect and benefit of providing synchronized output values for multiple sensors. Since different sensors can be designed to produce their sensor readings at different frequencies, it can sometimes be challenging to synchronously retrieve accurate sensor output values in real time. In such instances, sensor data obtained from multiple sensors could potentially include some sensor data that is more recently detected than others. If all the sensor data is provided as input to a trained virtual sensor model in accordance with the disclosed technology, then a virtual sensor output vector that predicts the sensor data based on machine-learned correlations can yield improved sensor outputs. These improvements can be realized, for example, by translating the more recently detected sensor outputs to estimated updated values for other sensor outputs based on the learned correlations across multiple sensors. Further, in some implementations, the virtual sensor model can provide interpolated sensor output values.

The systems and methods described herein may also provide technical, machine learning based solutions to the technical problem of sensor latency. Sensors can sometimes experience delays or otherwise not provide their readings in a timely manner, which can be problematic for certain applications. For instance, virtual reality applications can benefit immensely from reduced sensor latency. By providing current sensor output values as input to a machine-learned sensor output model, future sensor output values that are predicted based on known correlations can provide quicker updates than if waiting for sensor updates to be refreshed. Use of the disclosed machine-learned sensor output models to determine predicted future sensor output values can also be used to reduce latency for expected inputs received by a computing device. As such, software applications that make use of sensor outputs can provide enhanced performance. When such applications can utilize the disclosed machine-learned models to become more responsive to user inputs, the applications can react to sensor readings more quickly and sometimes in advance.

The systems and methods described herein may also provide a technical effect and benefit of improved computer technology in the form of a relatively low memory usage/requirement. In particular, the machine-learned models described herein effectively summarize the training data and compress it into compact form (e.g., the machine-learned model itself). This greatly reduces the amount of memory needed to store and implement the sensor refinement and/or prediction algorithm(s).

With reference now to the Figures, example embodiments of the present disclosure will be discussed in further detail.

### Example Devices and Systems

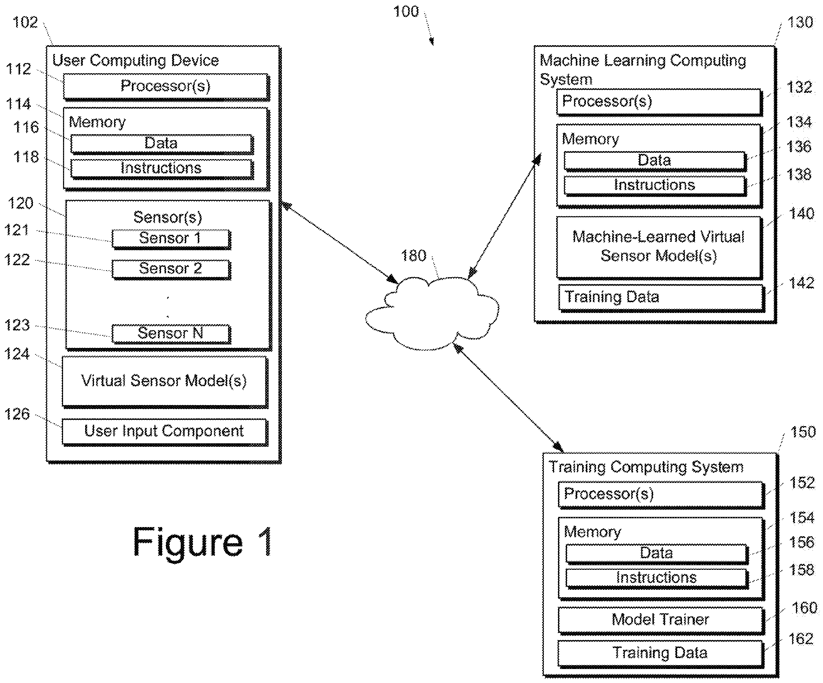

Figure 1 depicts an example computing system 100 to perform machine learning to implement a virtual sensor according to example embodiments of the present disclosure. The system 100 includes a user computing device 102, a machine learning computing system 130, and a training computing system 150 that are communicatively coupled over a network 180.

The user computing device 102 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 102 can include one or more processors 112 and a memory 114. The one or more processors 112 can be any suitable processing device (e.g., a processor core, a microprocessor, an ASIC, a FPGA, a controller, a microcontroller, etc.) and can be one processor or a plurality of processors that are operatively connected. The memory 114 can include one or more non-transitory computer-readable storage mediums, such as RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

The user computing device 102 can include multiple sensors 120. In some implementations, user computing device 102 has two or more sensors up to a total number of N sensors (e.g., Sensor 1 121, Sensor 2 122,..., Sensor N 123). Each sensor 121-123, respectively, can be indicative of one or more measured parameters in the sensor's physical environment. Sensors 121-123 can include, but are not limited to, a motion sensor, an accelerometer, a gyroscope, an orientation sensor, a magnetic field sensor, an audio sensor (e.g., microphone), an image sensor (e.g., camera), a linear acceleration sensor, a gravity sensor, a rotation vector sensor, a magnetometer, a location sensor (e.g., GPS), an inertial motion unit, an odometer, a barometer, a thermometer, a hygrometer, a touch-sensitive sensor, a fingerprint sensor, a proximity sensor, any combination of such sensors and others, etc.

The user computing device 102 can store or include one or more virtual sensor models 124. In some examples, the one or more virtual sensor models 124 include a sensor output refinement model. In some implementations, the one or more virtual sensor models 124 include a sensor output prediction model. In some examples, the one or more virtual sensor models 124 provide one or more sensor output refinement values and one or more sensor output prediction values. In some implementations, the one or more virtual sensor models 124 can be received from the machine learning computing system 130 over network 180, stored in the user computing device memory 114, and then used or otherwise implemented by the one or more processors 112. In some implementations, the user computing device 102 can implement multiple parallel instances of a single virtual sensor model 120 (e.g., to perform parallel processing of sensor refinement and sensor prediction).

The user computing device 102 can also include one or more user input components 126 that receive user input. For example, the user input component 126 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can enter a communication.

The machine learning computing system 130 can include one or more processors 132 and a memory 134. The one or more processors 132 can be any suitable processing device (e.g., a processor core, a microprocessor, an ASIC, a FPGA, a controller, a microcontroller, etc.) and can be one processor or a plurality of processors that are operatively connected. The memory 134 can include one or more non-transitory computer-readable storage mediums, such as RAM, ROM, EEPROM, EPROM, flash memory devices, magnetic disks, etc., and combinations thereof. The memory 134 can store data 136 and instructions 138 which are executed by the processor 132 to cause the machine learning computing system 130 to perform operations.

In some implementations, the machine learning computing system 130 includes or is otherwise implemented by one or more server computing devices. In instances in which the machine learning computing system 130 includes plural server computing devices, such server computing devices can operate according to sequential computing architectures, parallel computing architectures, or some combination thereof.

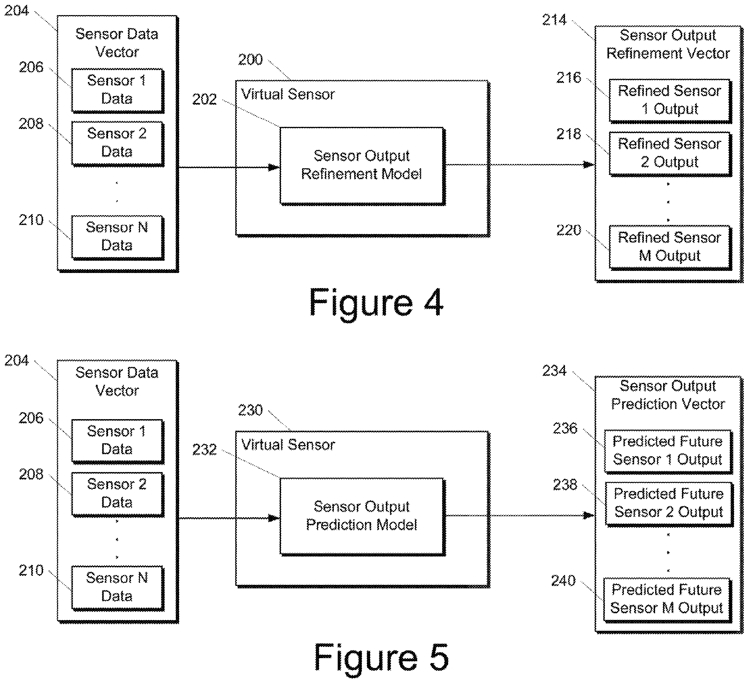

The machine learning computing system 130 can store or otherwise include one or more machine-learned virtual sensor models 140. For example, the virtual sensor models 140 can be or can otherwise include various machine-learned models such as neural networks (e.g., deep recurrent neural networks) or other multi-layer non-linear models, regression-based models or the like. Example virtual sensor models 140 are discussed with reference to Figures 4-7.

The machine learning computing system 130 can train the virtual sensor models 140 via interaction with the training computing system 150 that is communicatively coupled over the network 180. The training computing system 150 can be separate from the machine learning computing system 130 or can be a portion of the machine learning computing system 130.

The training computing system 150 can include one or more processors 152 and a memory 154. The one or more processors 152 can be any suitable processing device (e.g., a processor core, a microprocessor, an ASIC, a FPGA, a controller, a microcontroller, etc.) and can be one processor or a plurality of processors that are operatively connected. The memory 154 can include one or more non-transitory computer-readable storage mediums, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 140 stored at the machine learning computing system 130 using various training or learning techniques, such as, for example, backwards propagation (e.g., truncated backpropagation through time). The model trainer 160 can perform a number of generalization techniques (e.g., weight decays, dropouts, etc.) to improve the generalization capability of the models being trained.

In particular, the model trainer 160 can train a virtual sensor model 140 based on a set of training data 142. The training data 142 can include ground-truth sensor data (e.g., ground-truth vectors that describe recorded sensor readings or other sensor data). In some implementations, if the user has provided consent, the training examples can be provided by the user computing device 102 (e.g., based on sensor data detected by the user computing device 102). Thus, in such implementations, the model 120 provided to the user computing device 102 can be trained by the training computing system 150 on user-specific sensor data received from the user computing device 102. In some instances, this process can be referred to as personalizing the model.

The model trainer 160 can include computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM hard disk or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

Figure 1 illustrates one example computing system that can be used to implement the present disclosure. Other computing systems can be used as well. For example, in some implementations, the user computing device 102 can include the model trainer 160 and the training dataset 162. In such implementations, the virtual sensor models can be both trained and used locally at the user computing device.

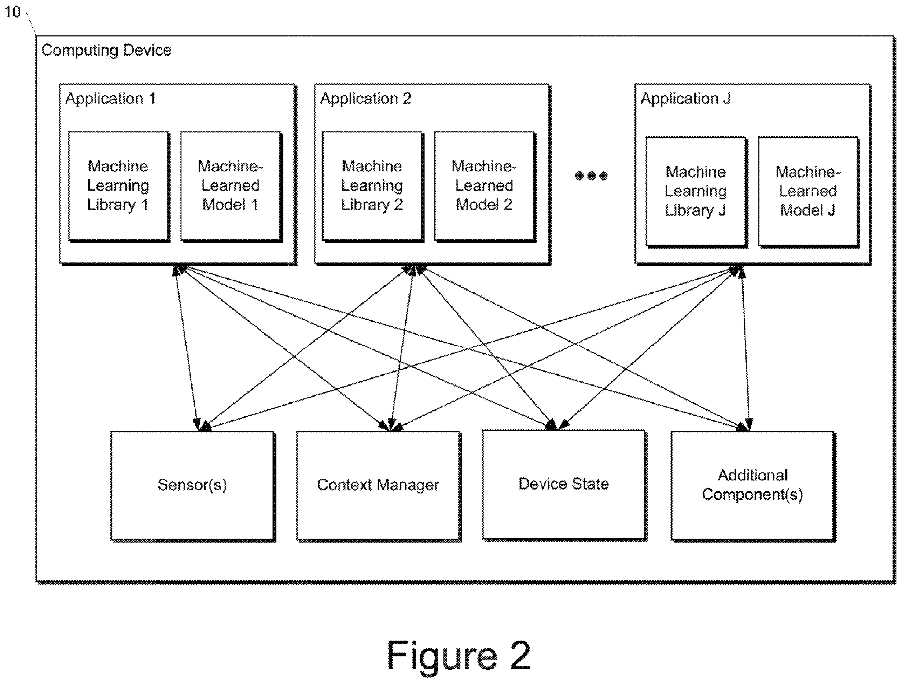

Figure 2 depicts a block diagram of an example computing device 10 that performs communication assistance according to example embodiments of the present disclosure. The computing device 10 can be a user computing device or a server computing device.

The computing device 10 includes a number of applications (e.g., applications 1 through J). Each application contains its own machine learning library and machine-learned model(s). For example, each application can include a machine-learned communication assistance model. Example applications include a text messaging application, an email application, a dictation application, a virtual keyboard application, a browser application, a virtual reality (VR) application, etc.

As illustrated in Figure 2, each application can communicate with a number of other components of the computing device, such as, for example, one or more sensors, a context manager, a device state component, and/or additional components. In some implementations, each application can communicate with each device component using an API (e.g., a public API). In some implementations, the API used by each application can be specific to that application.

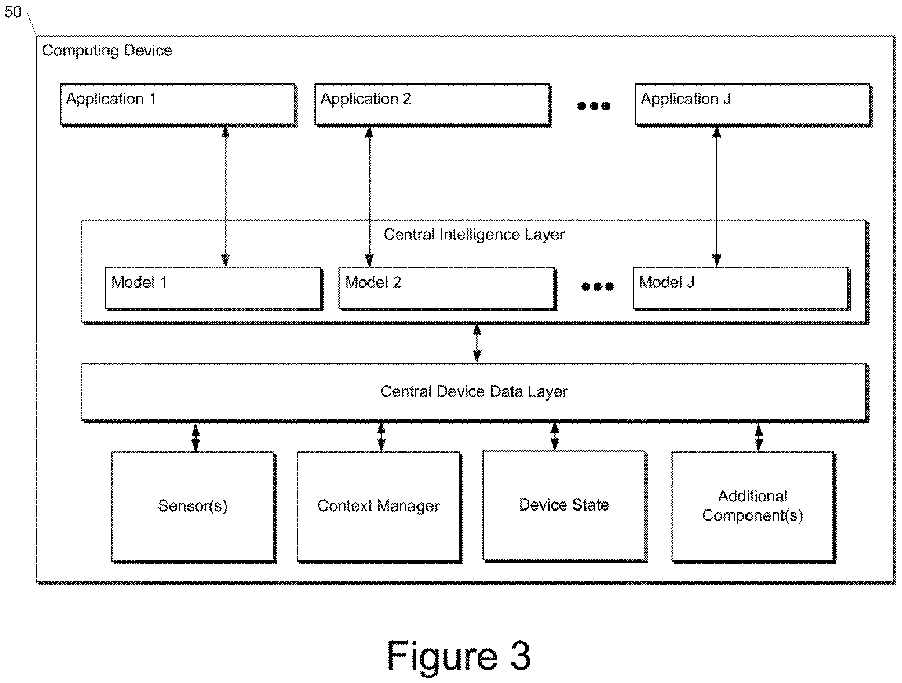

Figure 3 depicts a block diagram of an example computing device 50 that performs communication assistance according to example embodiments of the present disclosure. The computing device 50 can be a user computing device or a server computing device.

The computing device 50 includes a number of applications (e.g., applications 1 through J). Each application can be in communication with a central intelligence layer. Example applications include a text messaging application, an email application, a dictation application, a virtual keyboard application, a browser application, a virtual reality (VR) application, etc. In some implementations, each application can communicate with the central intelligence layer (and model(s) stored therein) using an API (e.g., a common API across all applications).

The central intelligence layer includes a number of machine-learned models. For example, as illustrated in Figure 3, a respective machine-learned model (e.g., a communication assistance model) can be provided for each application and managed by the central intelligence layer. In other implementations, two or more applications can share a single machine-learned model. For example, in some implementations, the central intelligence layer can provide a single model (e.g., a single communication assistance model) for all of the applications. In some implementations, the central intelligence layer can be included within or otherwise implemented by an operating system of the computing device 50.

The central intelligence layer can communicate with a central device data layer. The central device data layer can be a centralized repository of data for the computing device 50. As illustrated in Figure 3, the central device data layer can communicate with a number of other components of the computing device, such as, for example, one or more sensors, a context manager, a device state component, and/or additional components. In some implementations, the central device data layer can communicate with each device component using an API (e.g., a private API).

### Example Virtual Sensor Models

Figure 4 depicts a first example virtual sensor model 200 according to example embodiments of the present disclosure. In the particular implementation of Figure 4, virtual sensor model 200 includes a sensor output refinement model 202.

The sensor output refinement model 202 can be a machine-learned model. In some implementations, sensor output refinement model 202 can be or can otherwise include various machine-learned models such as neural networks (e.g., deep recurrent neural networks) or other multi-layer non-linear models, regression-based models or the like. When sensor output refinement model 202 includes a recurrent neural network, this can be a multi-layer long short-term memory (LSTM) neural network, a multi-layer gated recurrent unit (GRU) neural network, or other form of recurrent neural network.

The sensor output refinement model 202 can be configured to receive sensor data from multiple sensors. In one example, a user computing device (e.g., a mobile computing device such as a smartphone) can obtain sensor data from multiple sensors that can be collectively represented as a sensor data vector 204. In some examples, the sensor data vector 204 includes sensor data from two or more sensors. In some implementations, sensor data vector 204 includes sensor data from N different sensors (e.g., Sensor 1, Sensor 2,..., Sensor N) such that each sensor data vector 204 has N dimensions, each dimension corresponding to sensor data 206-210, for one of the N different sensors, respectively. The sensor data 206-210 from each sensor as gathered in sensor data vector 204 can be indicative of one or more measured parameters in the sensor's physical environment. Sensors from which sensor data 206-210 is obtained can include, but are not limited to, a motion sensor, an accelerometer, a gyroscope, an orientation sensor, a magnetic field sensor, an audio sensor (e.g., microphone), an image sensor (e.g., camera), a linear acceleration sensor, a gravity sensor, a rotation vector sensor, a magnetometer, a location sensor (e.g., GPS), an inertial motion unit, an odometer, a barometer, a thermometer, a hygrometer, a touch-sensitive sensor, a fingerprint sensor, a proximity sensor, any combination of such sensors and others, etc.

Sensor output refinement model 202 can be trained to recognize correlations among sensor data 206-210 from the multiple sensors in sensor data vector 204. Sensor output refinement model 202 can output a sensor output refinement vector 214 that includes one or more refined sensor output values 216-220 in response to receipt of the sensor data 206-210 in sensor data vector 204. In some examples, the sensor output refinement vector 214 provides two or more refined sensor outputs 216-220. In some examples, sensor output refinement vector 214 includes one or more refined sensor outputs 216-220 for M different sensors such that each sensor output refinement vector 214 has M dimensions, each dimension corresponding to a refined sensor output value for one of the M different sensors.

In some examples, the M-dimensional sensor output refinement vector 214 has a same number of dimensions as the N-dimensional sensor data vector 204 (e.g., M=N). In such instances, a refined sensor output value can be determined for each sensor that was sampled and whose sensor data was provided as input to the virtual sensor model 200. In some examples, the number of dimensions (N) of the sensor data vector 204 can be greater than the number of dimensions (M) of the sensor output refinement vector 214 (e.g., N>M). This could be the case if the sampled sensor data 206-210 was used to refine a value for only a subset of sampled sensor(s) that are of particular importance for a particular application or for which a particular application has permission to access.

Refined sensor outputs 216-220 generated in accordance with the disclosed techniques can provide improvements relative to original sensor data 206-210 by holistically leveraging the fact that the sum of multiple sensor measurements can typically be better than each sensor measurement considered individually. For example, Sensor 1 may correspond to a first motion sensor (e.g., an accelerometer) and Sensor 2 may correspond to a second motion sensor (e.g., a gyroscope). Both first and second motion sensors may register a change in state via sensor 1 data 206 and sensor 2 data 208 when a device including such sensors is subjected to movement. The sensor output refinement model 202 can first learn and then leverage the correlation between such sensors to help improve currently sampled sensor output values. For instance, the accelerometer readings can be used to help improve the gyroscope readings and the gyroscope readings can be used to help improve the accelerometer readings. Refined sensor 1 output 216 and refined sensor 2 output 218 can represent, for example, such refined sensor readings for a gyroscope and accelerometer.

In some implementations, the sensor output refinement model 202 can learn nuanced and complex correlations or inter-dependencies between a significant number of sensors (e.g., more than two as provided in the example above) and can holistically apply such learned correlations to improve or otherwise refine the sensor outputs for some or all of such significant number of sensors. Sensor correlation can also help the sensor output refinement model 202 to identify and manage sensor data outliers that may arise from noisy and/or faulty measurement at certain instances of time.

In some implementations, the sensor output refinement model 202 can be a temporal model that allows the sensor data 204 to be referenced in time. In such implementations, the sensor data provided as input to the sensor output refinement model 202 can be a sequence of T inputs, each input corresponding to a sensor data vector 204 obtained at a different time step. For instance, a time-stepped sequence of sensor data from multiple sensors can be obtained iteratively. Consider sensor data obtained from N different sensors that is iteratively obtained at T different sample times (e.g., t₁, t₂, ..., t_{T}). In such example, a N-dimensional sensor data vector 204 providing a sensor reading for each of the N different sensors is obtained for each of the T different times. Each of these sensor data vectors 204 can be iteratively provided as input to the virtual sensor model 200 as it is iteratively obtained. In some examples, the time difference between the T different sample times (e.g., t₁, t₂, ..., t_{T}) can be the same or it can be different.

Figure 5 depicts a second example virtual sensor model 230 according to example embodiments of the present disclosure. In the particular implementation of Figure 5, virtual sensor model 230 includes a sensor output prediction model 232.

The sensor output prediction model 232 can be a machine-learned model. In some implementations, sensor output prediction model 232 can be or can otherwise include various machine-learned models such as neural networks (e.g., deep recurrent neural networks) or other multi-layer non-linear models, regression-based models or the like. When sensor output prediction model 232 includes a recurrent neural network, this can be a multi-layer long short-term memory (LSTM) neural network, a multi-layer gated recurrent unit (GRU) neural network, or other form of recurrent neural network.

The sensor output prediction model 232 can be configured to receive sensor data 204 from multiple sensors as described relative to Figure 4. Sensor output prediction model 232 can be trained to recognize correlations among sensor data 206-210 from the multiple sensors. Sensor output prediction model 232 can output a sensor output prediction vector 234 that includes one or more predicted future sensor output values 236-240 in response to receipt of the sensor data 206-210 from multiple sensors. In some examples, the sensor output prediction vector 234 provides two or more predicted future sensor outputs 236-240. In some examples, sensor output prediction vector 234 includes one or more predicted sensor output values for M different sensors such that each sensor output prediction vector 234 has M dimensions, each dimension corresponding to a predicted future sensor output value for one of the M different sensors.

In some examples, the M-dimensional sensor output prediction vector 234 has a same number of dimensions as the N-dimensional sensor data vector 204 (e.g., M=N). In such instances, a predicted sensor output value can be determined for each sensor that was sampled and whose sensor data was provided as input to the virtual sensor model 230. In some examples, the number of dimensions (N) of the sensor data vector 204 can be less than the number of dimensions (M) of the sensor output prediction vector 234 (e.g., N<M). This could be the case if the sampled sensor data from one or more sensors was used to refine those values as well as predict a value for a different non-sampled sensor. In some examples, the number of dimensions (N) of the sensor data vector 204 can be greater than the number of dimensions (M) of the sensor output prediction vector 234 (e.g., N>M). This could be the case if the sampled sensor data 206-210 from multiple sensors was used to predict a value for only a subset of sampled sensor(s) that are of particular importance for a particular application or for which a particular application has permission to access.

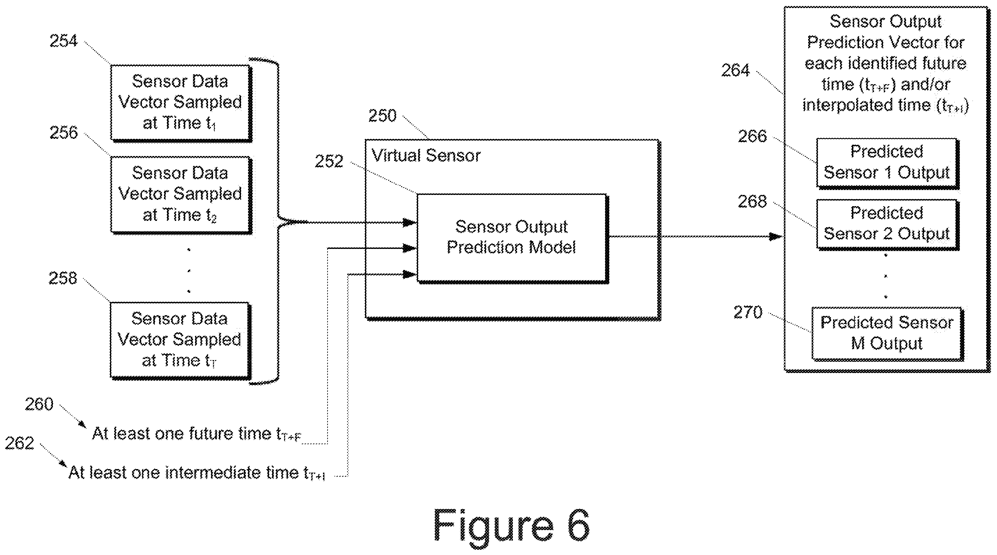

Predicted sensor outputs 236-240 generated in accordance with the disclosed techniques can describe one or more predicted future sensor outputs for one or more of the multiple sensors for one or more future times. For instance, the sensor output prediction vector 234 can be a prediction of what each sensor (e.g., Sensor 1, Sensor 2,..., Sensor M) will likely read in the next time step or, for example, the next three time steps. In some examples, an additional time input can be provided to the sensor output prediction model 232 to specify the one or more particular future times for which predicted future sensor outputs 236-240 are to be generated. In some examples, the sensor output prediction model 232 can also output a learned confidence measure for each of the predicted future sensor outputs. For example, a confidence measure for each predicted future sensor output 236-240 could be represented as a confidence measure value within a range (e.g., 0.0-1.0 or 0-100%) indicating a degree of likely accuracy with which a predicted future sensor output is determined. More particular aspects of the temporal nature of a sensor output prediction model are depicted in Figure 6.

Referring now to Figure 6, a third example virtual sensor model 250 according to example embodiments of the present disclosure is depicted. In the particular implementation of Figure 6, virtual sensor model 250 includes a sensor output prediction model 252.

In some implementations, the sensor output prediction model 252 can be a temporal model that allows the sensor data to be referenced in time. In such implementations, the sensor data provided as input to the sensor output prediction model 252 can be a sequence of T inputs 254-258, each input corresponding to a sensor data vector (e.g., similar to sensor data vector 204) obtained at a different time step. For instance, a time-stepped sequence of sensor data vectors 254-258 from multiple sensors can be obtained iteratively. Consider sensor data obtained from N different sensors that is iteratively obtained at T different sample times (e.g., t₁, t₂, ..., t_{T}). In some examples, the time difference between the T different sample times (e.g., t₁, t₂, ..., t_{T}) can be the same or it can be different. In such example, a N-dimensional sensor data vector providing a sensor reading for each of the N different sensors is obtained for each of the T different times. For instance, a first sensor data vector 254 can correspond to data sampled from each of N different sensors at time t₁. A second sensor data vector 256 can correspond to data sampled from each of N different sensors at time t₂. An additional number of sensor data vectors can be provided in a sequence of T time-stepped samples until a last sensor data vector 258 is provided that corresponds to data sampled from each of N different sensors at time t_{T}. Each of the sensor data vectors 254-258 can be iteratively provided as input to the virtual sensor model 250 as it is iteratively obtained.

In some implementations, the sensor output prediction model 252 receives future time information 260 that describes at least one future time t_{T+F} for which predicted sensor outputs are desired. In some examples, the future time information 260 includes multiple future times (e.g., t_{T+1}, t_{T+2},..., t_{T+F}). For example, the future time information 260 can be a time vector that provides a list of time lengths that are desired to be predicted by the sensor output prediction model 252 (e.g., 10ms, 20ms, 30ms, etc.). In response to receipt of the future time information 260 and one or more of the sensor data vectors 254-258, the sensor output prediction model 252 of virtual sensor model 250 can output a sensor output prediction vector 264 for each of the future times identified in future time information 260. Each sensor output prediction vector 264 can correspond to a predicted sensor output 266-270 for M different sensors. Although only a single sensor output prediction vector 264 is depicted in Figure 6, multiple sensor output prediction vectors can be output by sensor output prediction model 252 simultaneously (e.g., when multiple different future times are identified by future time information 260) and/or iteratively (e.g., a new sensor output prediction vector 264 can be output from the sensor output prediction model 252 each time a new sensor data vector 254-258 is iteratively provided as input).

In some implementations, the sensor output prediction model 252 receives interpolated time information 262 that describes at least one interpolated time for which predicted sensor outputs are desired. Interpolated times can be identified when it is desired to increase the sampling rate of sensors whose data is refined and/or predicted in accordance with the disclosed technology. In general, predicted sensor outputs at interpolated times can be determined in part by receiving sensor data readings from multiple sensors at first and second times (e.g., t and t+2). Learned correlations among multiple sensors can be holistically leveraged by the virtual sensor model to interpolate a sensor output value for an intermediate time (e.g., t+1) between the first time (t) and the second time (t+2). In some examples, the interpolated time information 262 includes multiple times (e.g., t+1, t+3, t+5, etc.). For example, the interpolated time information 262 can be a time vector that provides a list of time lengths that are desired to be predicted by the sensor output prediction model 252. For instance, if sensor data vectors 254-258 provide sensor data sampled at times that are evenly spaced by 10ms, the interpolated time information 262 could provide a list of time lengths that are between the sampled times (e.g., every 5ms between the sampled sensor data times). **In** response to receipt of the interpolated time information 262 and one or more of the sensor data vectors 254-258, the sensor output prediction model 252 of virtual sensor model 250 can output a sensor output prediction vector 264 for each of the interpolated times identified in interpolated time information 262. Each sensor output prediction vector 264 can correspond to a predicted sensor output 266-270 for M different sensors. Although only a single sensor output prediction vector 264 is depicted in Figure 6, multiple sensor output prediction vectors can be output by sensor output prediction model 252 simultaneously (e.g., when multiple different interpolated times are identified by interpolated time information 262) and/or iteratively (e.g., a new sensor output prediction vector 264 for an interpolated time can be output from the sensor output prediction model 252 each time a new sensor data vector 254-258 is iteratively provided as input).

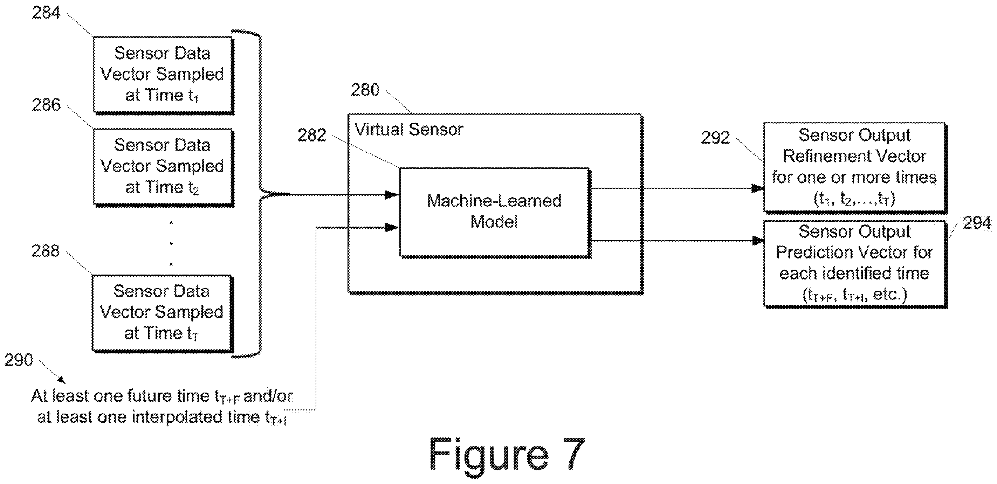

Although Figure 6 shows future time information 260 and interpolated time information 262 as separate inputs to sensor output prediction model 252, it should be appreciated that a single time vector or other signal providing timing information can be provided as input to sensor output prediction model 252, such as depicted in Figure 7. Such single time vector can include information describing one or more future times and one or more interpolated times. In the same manner, sensor output prediction model 252 of virtual sensor model 250 can be configured to output multiple sensor output vectors 264 for each of the one or more identified future times and/or interpolated times.

In some implementations, the provision of predicted sensor output vectors 264 by sensor output prediction model 252 of virtual sensor model 250 can provide synchronized sensor output values for multiple sensors (e.g., Sensor 1, Sensor 2,..., Sensor M). Synchronized sensor output values can be output by a virtual sensor model 250 by receiving sensor data 254-258 from multiple sensors (e.g., Sensor 1, Sensor 2,..., Sensor N), wherein sensor data from at least some of the multiple sensors (e.g., a first set of sensors) is more recently detected than others (e.g., a second set of sensors). Virtual sensor outputs can utilize the learned correlations and other relationships among the multiple sensors to predict/refine an updated sensor output for all of the sensors (including the first set of sensors and the second set of sensors) at a same or synchronized time.

Referring now to Figure 7, a fourth example virtual sensor model 280 according to example embodiments of the present disclosure is depicted. In the particular implementation of Figure 7, virtual sensor model 280 includes a machine-learned model 282 configured to provide multiple outputs. In some implementations, the machine-learned model 282 can be or can otherwise include one or more neural networks (e.g., deep recurrent neural networks) or other multi-layer non-linear models, regression-based models or the like. When machine-learned model 282 includes a recurrent neural network, this can be a multi-layer long short-term memory (LSTM) neural network, a multi-layer gated recurrent unit (GRU) neural network, or other form of recurrent neural network. At least one first output of the machine-learned model 282 of the virtual sensor model 280 includes one or more refined sensor output values in a sensor output refinement vector 292. At least one second output of virtual sensor model 280 includes one or more predicted sensor output values in a sensor output prediction vector 294. The machine-learned model 282 of virtual sensor model 280 can be trained to determine both sensor refinements and sensor predictions at the same time based on a same training set of sensor data.

The virtual sensor model 280 can be configured to receive sensor data from multiple sensors. In some implementations, virtual sensor model 280 can be configured to receive sensor data at multiple times (e.g., a time-stepped sequence of T different times). In some implementations, the sensor data provided as input to the virtual sensor model 280 can be a sequence of T inputs 284-288, each input corresponding to a sensor data vector (e.g., similar to sensor data vector 204) obtained at a different time step. For instance, a time-stepped sequence of sensor data vectors 284-288 from multiple sensors can be obtained iteratively. Consider sensor data obtained from N different sensors that is iteratively obtained at T different sample times (e.g., t₁, t₂, ..., t_{T}). In some examples, the time difference between the T different sample times (e.g., t₁, t₂, ..., t_{T}) can be the same or it can be different. In such example, a N-dimensional sensor data vector providing a sensor reading for each of the N different sensors is obtained for each of the T different times. For instance, a first sensor data vector 284 can correspond to data sampled from each of N different sensors at time t₁. A second sensor data vector 286 can correspond to data sampled from each of N different sensors at time t₂. An additional number of sensor data vectors can be provided in a sequence of T time-stepped samples until a last sensor data vector 288 is provided that corresponds to data sampled from each of N different sensors at time t_{T}. Each of the sensor data vectors 284-288 can be iteratively provided as input to the virtual sensor model 280 as it is iteratively obtained.

Virtual sensor model 280 can be trained to recognize correlations among sensor data from the multiple sensors in each sensor data vector 284-288. Virtual sensor model 282 can output one or more sensor output refinement vectors 292 that include one or more refined sensor output values and one or more sensor output prediction vectors 294 that include one or more predicted sensor output values in response to receipt of one or more sensor data vectors 284-288. In some examples, some or all of the sensor output refinement vectors 292 and sensor output prediction vectors 294 respectively provide two or more refined/predicted sensor outputs. In some examples, some or all of the sensor output refinement vectors 292 and sensor output prediction vectors 294 provide refined/predicted sensor outputs for M different sensors such that a sensor output refinement vector 292 and/or a sensor output prediction vector has M dimensions, each dimension corresponding to a refined/predicted sensor output value for one of the M different sensors.

In some examples, some or all of the M-dimensional sensor output refinement vectors 292 and M-dimensional sensor output prediction vectors 294 have a same number of dimensions as a N-dimensional sensor data vector 284-288 (e.g., M=N). In such instances, a refined/predicted sensor output value can be determined for each sensor that was sampled and whose sensor data was provided as input to the virtual sensor model 280. In some examples, the number of dimensions (N) of the sensor data vectors 284-288 can be less than the number of dimensions (M) of the sensor output refinement vectors 292 and/or sensor output prediction vectors 294 (e.g., N<M). This could be the case if the sampled sensor data from one or more sensors was used to refine/predict those values as well as predict a value for a different non-sampled sensor. In some examples, the number of dimensions (N) of each sensor data vector 284-288 can be greater than the number of dimensions (M) of a sensor output refinement vector 292 and/or a sensor output prediction vector 294 (e.g., N>M). This could be the case if the sampled sensor data in sensor data vectors 284-288 is used to refine/predict a value for only a subset of sampled sensor(s) that are of particular importance for a particular application or for which a particular application has permission to access.

In some implementations, the virtual sensor model 280 receives time information 290 that describes one or more future times t_{T+F} and/or one or more interpolated times t_{T+I} for which predicted sensor outputs are desired. In some examples, the time information 290 includes multiple future and/or interpolated times. For example, the time information 290 can be a time vector that provides a list of time lengths that are desired to be predicted by the virtual sensor model 280 (e.g., -25ms, -15ms, -5ms, 5ms, 15ms, 25ms, etc.). In response to receipt of the time information 290 and one or more of the sensor data vectors 284-288, the machine-learned model 282 of virtual sensor model 280 can output a sensor output refinement vector 292 for one or more times and a sensor output prediction vector 294 for one or more times. Although only a single sensor output refinement vector 292 is depicted in Figure 7, multiple sensor output refinement vectors can be output by virtual sensor model 280 (e.g., iteratively as each new sensor data vector 284-288 is iteratively provided as input to virtual sensor model 280). Although only a single sensor output prediction vector 294 is depicted in Figure 7, multiple sensor output prediction vectors can be output by virtual sensor model 280 (e.g., simultaneously when multiple different future times and/or interpolated times are identified by time information 290 and/or iteratively as each new sensor data vector 284-288 is iteratively provided as input to virtual sensor model 280).

### Example Methods

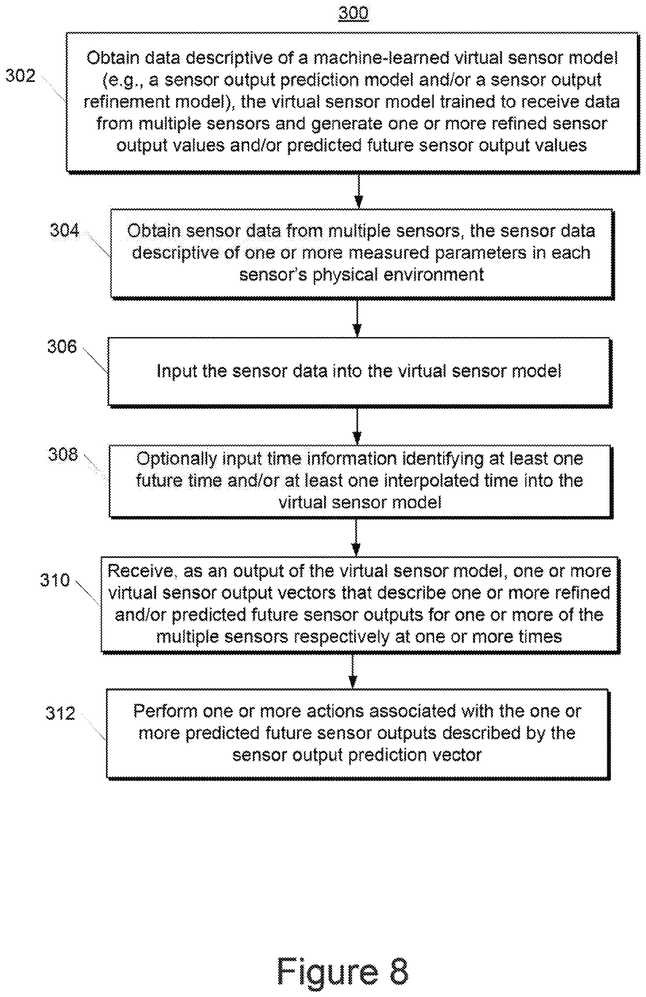

Figure 8 depicts a flow chart diagram of an example method 300 to perform machine learning according to example embodiments of the present disclosure.

At 302, one or more computing devices can obtain data descriptive of a machine-learned virtual sensor model. The virtual sensor model can have been trained to receive data from multiple sensors, learn correlations among sensor data from the multiple sensors, and generate one or more outputs. In some examples, the virtual sensor model includes a sensor output prediction model configured to generate one or more predicted sensor output values. In some examples, the virtual sensor model includes a sensor output refinement model configured to generate one or more refined sensor output values. In some examples, the virtual sensor model includes a joint model that can be configured to generate one or more refined sensor output values and one or more predicted sensor output values. The virtual sensor model can be or can otherwise include various machine-learned models such as neural networks (e.g., deep recurrent neural networks) or other multi-layer non-linear models, regression-based models or the like. When the virtual sensor model includes a recurrent neural network, this can be a multi-layer long short-term memory (LSTM) neural network, a multi-layer gated recurrent unit (GRU) neural network, or other form of recurrent neural network. The virtual sensor model for which data is obtained at 302 can include any of the virtual sensor models 200, 230, 250, 280 of Figures 4-7 or variations thereof.

At 304, one or more computing devices can obtain sensor data from multiple sensors. The sensor data can be descriptive of one or more measured parameters in each sensor's physical environment. Sensors from which sensor data is obtained at 304 can include, but are not limited to, a motion sensor, an accelerometer, a gyroscope, an orientation sensor, a magnetic field sensor, an audio sensor (e.g., microphone), an image sensor (e.g., camera), a linear acceleration sensor, a gravity sensor, a rotation vector sensor, a magnetometer, a location sensor (e.g., GPS), an inertial motion unit, an odometer, a barometer, a thermometer, a hygrometer, a touch-sensitive sensor, a fingerprint sensor, a proximity sensor, any combination of such sensors and others, etc. In some implementations, sensor data can be obtained from a multiple number (N) of different sensors at 304. In such instances, sensor data can take the form of a sensor data vector, wherein each of the sensor data vectors has N dimensions, each dimension corresponding to sensor data for one of the N different sensors.

At 306, one or more computing devices can input the sensor data obtained at 304 into a machine-learning system of the virtual sensor model. In some implementations, such as when the virtual sensor model is configured to generate at least one predicted sensor output value, one or more computing devices can optionally input at 308 time information identifying at least one future time and/or at least one interpolated time into the virtual sensor model. In some implementations, the time information provided as input at 308 can be in the form of a time vector descriptive of one or more future times and/or one or more interpolated times. The one or more future times and/or one or more interpolated can be defined as time lengths relative to the current time and/or the time at which the multiple sensors were sampled to obtain the sensor data at 304.

At 308, one or more computing devices can receive, as an output of the virtual sensor model, one or more virtual sensor output vectors. In some examples, the virtual sensor output vector can include a sensor output prediction vector. In some examples, the virtual sensor output vector can include a sensor output refinement vector. In some examples, the virtual sensor output vector can include a combination of one or more refined sensor output values and one or more predicted sensor output values. In some examples, the one or more virtual sensor output vectors includes at least one sensor output refinement vector and at least one sensor output prediction vector. In some implementations, some or all of the virtual sensor output vectors include a sensor output value for M different sensors such that each of the virtual sensor output vectors has M dimensions, each dimension corresponding to a refined/predicted sensor output value for one of the M different sensors. When time information is provided at 308 as an input to the virtual sensor model, the one or more virtual sensor output vectors received at 310 can include one or more predicted future sensor output values and/or interpolated sensor output values for the one or more times.

At 312, one or more computing devices can perform one or more actions associated with the one or more virtual sensor outputs described by the virtual sensor output vector. In one example, the multiple sensors from which sensor data is obtained at 304 include one or more motion sensors associated with a virtual reality application. In such instance, performing one or more actions at 312 can include providing an output of the virtual sensor model to the virtual reality application. In another example, the multiple sensors from which sensor data is obtained at 304 include one or more vehicle sensors located in a vehicle. In such instance, performing one or more actions at 312 can include providing an output of the virtual sensor model to a vehicle control system. In yet another example, the multiple sensors from which sensor data is obtained at 304 can include one or more motion sensors in a mobile computing device. In such instance, performing one or more actions at 312 can include activating a component of the mobile computing device. In still further examples, performing one or more actions at 312 can include providing one or more refined/predicted sensor outputs in the virtual sensor output vector to an application via an application programming interface (API).

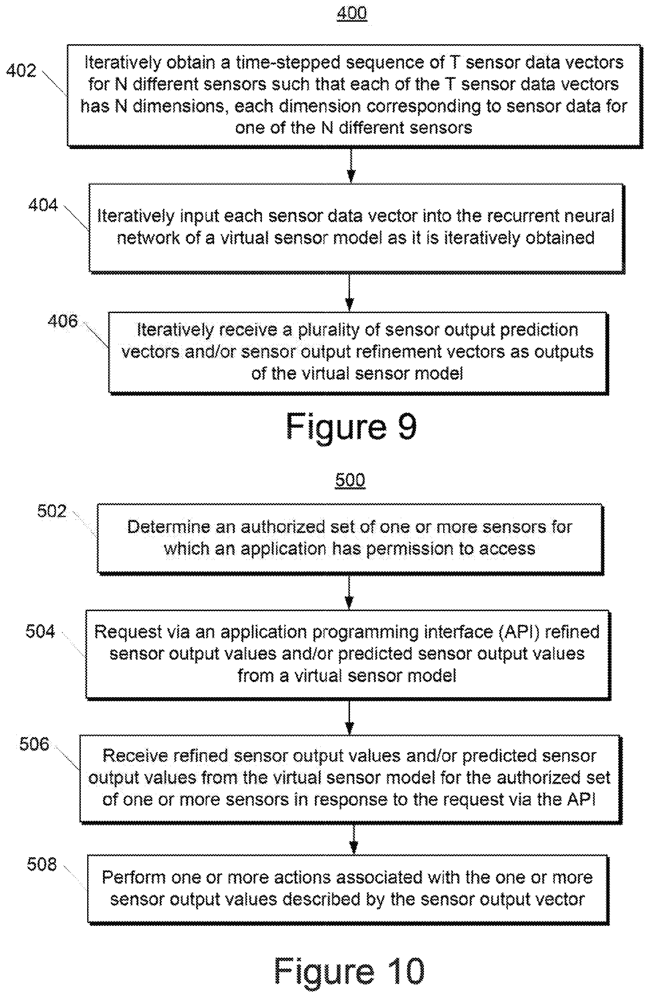

Figure 9 depicts a flow chart diagram of a first additional aspect of an example method 400 to perform machine learning according to example embodiments of the present disclosure. More particularly, Figure 9 describes a temporal aspect of providing inputs to a virtual sensor model and receiving outputs therefrom according to example embodiments of the present disclosure. At 402, one or more computing devices can iteratively obtain a time-stepped sequence of T sensor data vectors for N different sensors such that each of the T sensor data vectors has N dimensions, each dimension corresponding to sensor data for one of the N different sensors. Each sensor data vector obtained at 402 can be iteratively input by the one or more computing devices at 404 into the virtual sensor model as it is iteratively obtained. At 406, one or more computing devices can iteratively receive a plurality of sensor output prediction vectors and/or sensor output refinement vectors as outputs of the virtual sensor model. In some implementations, each sensor output prediction vector and/or sensor output refinement vector received at 406 from the virtual sensor model includes predicted/refined data for M different sensors at one or more times such that each of the sensor output prediction vectors and/or sensor output refinement vectors has M dimensions, each dimension corresponding to a predicted/refined sensor output value for one of the M different sensors.

Figure 10 depicts a flow chart diagram of a second additional aspect of an example method 500 to perform machine learning according to example embodiments of the present disclosure. More particularly, Figure 10 describes using an API to provide outputs of a virtual sensor model to one or more software applications. At 502, one or more computing devices can determine an authorized set of one or more sensors for which an application has permission to access. At 504, one or more computing devices can request via an application programming interface (API) refined sensor output values and/or predicted sensor output values from a virtual sensor model. At 506, the one or more computing devices can receive refined sensor output values and/or predicted sensor output values from the virtual sensor model for the authorized set of one or more sensors in response to the request via the API. At 508, one or more computing devices can perform one or more actions associated with the one or more sensor output values described by the sensor output vector. For example, if the application requesting sensor output values via the API is a mobile computing device application, one or more actions performed at 508 can include interacting with a component of a mobile computing device, activating a component of a mobile computing device, providing an output to a display device associated with the mobile computing device, etc. In other examples, the application requesting sensor output values via the API can be a virtual reality application, in which case one or more actions performed at 508 can include providing an output to an output device (e.g., a display device, haptic feedback device, etc.).

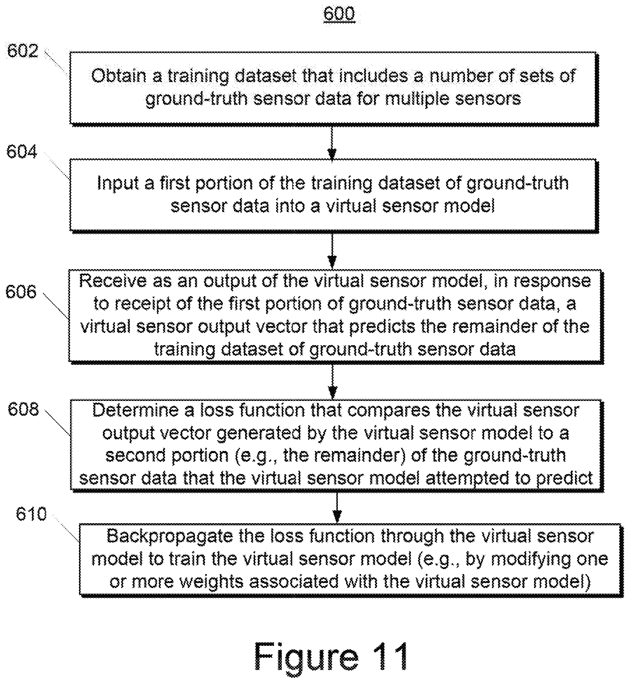

Figure 11 depicts a flow chart diagram of a first example training method 600 for a machine-learned virtual sensor model according to example embodiments of the present disclosure. More particularly, the first example training method of Figure 11 can be used to train a sensor output prediction model and/or a sensor output prediction portion of a virtual sensor model that is configured to provide both refined sensor output values and predicted future sensor output values.

At 602, one or more computing devices (e.g., within a training computing system) can obtain a training dataset that includes a number of sets of ground-truth sensor data for multiple sensors. For example, the training dataset can include sensor data that describes a large number of previously-observed sensor outputs for multiple sensors. At 604, one or more computing devices can input a first portion of the training dataset of ground-truth sensor data into a virtual sensor model. At 606, one or more computing devices can receive, as an output of the virtual sensor model, in response to receipt of the first portion of ground-truth sensor data, a virtual sensor output vector that predicts the remainder of the training dataset (e.g., a second portion of the ground-truth sensor data).

At 608, one or more computing systems within a training computing system or otherwise can apply or otherwise determine a loss function that compares the virtual sensor output vector generated by the virtual sensor model at 606 to a second portion (e.g., the remainder) of the ground-truth sensor data that the virtual sensor model attempted to predict. The one or more computing devices then can backpropagate the loss function at 610 through the virtual sensor model to train the virtual sensor model (e.g., by modifying at least one weight of the virtual sensor model). For example, the computing device can perform truncated backwards propagation through time to backpropagate the loss function determined at 608 through the virtual sensor model. A number of generalization techniques (e.g., weight decays, dropouts, etc.) can optionally be performed at 610 to improve the generalization capability of the models being trained. In some examples, the training procedure described in 602-610 can be repeated several times (e.g., until an objective loss function no longer improves) to train the model. After the model has been trained at 610, it can be provided to and stored at a user computing device for use in providing refined and/or predicted sensor outputs at the user computing device.

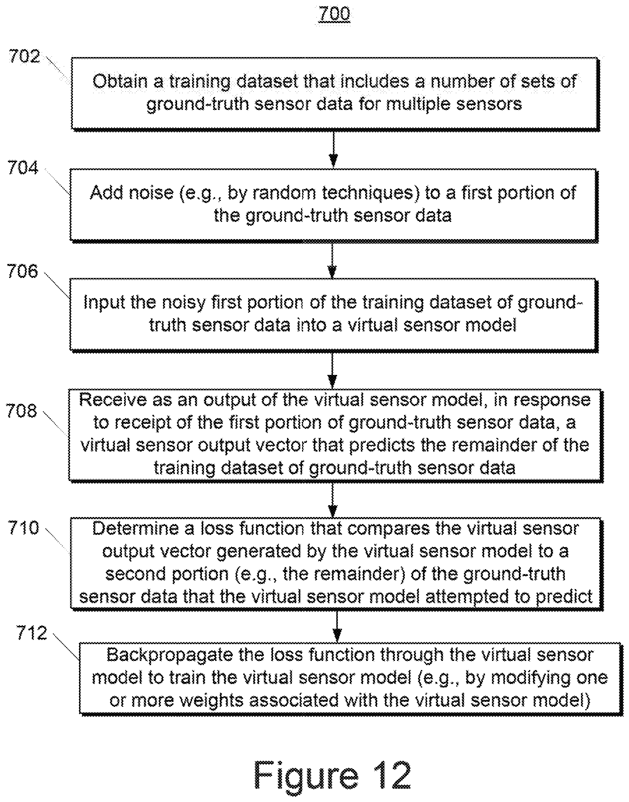

Figure 12 depicts a flow chart diagram of a second training method 700 for a machine learning model according to example embodiments of the present disclosure. More particularly, the second example training method of Figure 12 can be used to train a sensor output refinement model and/or a sensor output refinement portion of a virtual sensor model that is configured to provide both refined sensor output values and predicted future sensor output values. As such, the training method of Figure 12 can be an additional or an alternative training method to that depicted in Figure 11 depending on the configuration of the virtual sensor model.

At 702, one or more computing devices (e.g., within a training computing system) can obtain a training dataset that includes a number of sets of ground-truth sensor data for multiple sensors. For example, the training dataset can include sensor data that describes a large number of previously-observed sensor outputs for multiple sensors. At 704, noise can be added to a first portion of the ground-truth sensor data. In some implementations, noise can be added at 704 by adding a generated random noise signal to the first portion of ground-truth sensor data. At 706, one or more computing devices can input the resultant noisy first portion of sensor data into a virtual sensor model. At 708, one or more computing devices can receive, as an output of the virtual sensor model, in response to receipt of the noisy first portion of ground-truth sensor data, a virtual sensor output vector that predicts the remainder of the training dataset (e.g., a second portion of the ground-truth sensor data).

At 710, one or more computing systems within a training computing system or otherwise can apply or otherwise determine a loss function that compares the virtual sensor output vector generated by the virtual sensor model at 708 to a second portion (e.g., the remainder) of the ground-truth sensor data that the virtual sensor model attempted to predict. The one or more computing devices then can backpropagate the loss function at 712 through the virtual sensor model to train the virtual sensor model (e.g., by modifying at least one weight of the virtual sensor model). For example, the computing device can perform truncated backwards propagation through time to backpropagate the loss function determined at 710 through the virtual sensor model. A number of generalization techniques (e.g., weight decays, dropouts, etc.) can optionally be performed at 712 to improve the generalization capability of the models being trained. In some examples, the training procedure described in 702-712 can be repeated several times (e.g., until an objective loss function no longer improves) to train the model. After the model has been trained at 712, it can be provided to and stored at a user computing device for use in providing refined and/or predicted sensor outputs at the user computing device.

### Additional Disclosure

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

In particular, although Figures 8 through 12 respectively depict steps performed in a particular order for purposes of illustration and discussion, the methods of the present disclosure are not limited to the particularly illustrated order or arrangement. The various steps of the methods 300, 400, 500, 600, and 700 can be omitted, rearranged, combined, and/or adapted in various ways without deviating from the scope of the present disclosure, the scope being defined by the claims.

## Claims

1. A computing device that determines refined sensor output values from multiple sensor inputs, comprising:
at least one processor; and
at least one computer-readable medium that stores instructions that, when executed by the at least one processor, cause the at least one processor to perform operations, the operations comprising:
obtaining data descriptive of a machine-learned sensor output refinement model, wherein the sensor output refinement model has been trained to receive sensor data from multiple sensors, the sensor data from each sensor indicative of one or more measured parameters in the sensor's physical environment, recognize correlations among sensor outputs of the multiple sensors, and in response to receipt of the sensor data from multiple sensors, output refined sensor output values;
obtaining the sensor data from the multiple sensors, the sensor data descriptive of one or more measured parameters in each sensor's physical environment, wherein obtaining the sensor data from the multiple sensors comprises iteratively obtaining a time-stepped sequence of T sensor data vectors for N different sensors such that each of the T sensor data vectors has N dimensions, each dimension corresponding to sensor data for one of the N different sensors;
inputting the sensor data into the neural network of the sensor output refinement model, wherein inputting the sensor data into the sensor output refinement model comprises iteratively inputting each of the plurality of sensor data vectors into the sensor output refinement model as they are iteratively obtained;
receiving, as an output of the sensor output refinement model, a sensor output refinement vector that describes respective refined sensor output values for the multiple sensors, the refined sensor output values being refined values for the obtained sensor data and providing improved measures, relative to the original sensor data, of the one or more measured parameters, wherein receiving, as an output of the sensor output refinement model, a sensor output refinement vector comprises iteratively receiving a plurality of sensor output refinement vectors as outputs of the sensor output refinement model, wherein each sensor output refinement vector is for M different sensors such that each of the sensor output refinement vectors has M dimensions, each dimension corresponding to a refined sensor output value for one of the M different sensors.

2. The computing device of claim 1, wherein the computing device comprises a mobile computing device, wherein the mobile computing device further comprises one or more motion sensors, and wherein the operations further comprise activating a component of the mobile computing device based at least in part on the one or more refined sensor output values.

3. The computing device of claim 1 or 2, wherein the computing device comprises a mobile computing device, wherein the mobile computing device further comprises a gyroscope and an accelerometer, wherein the sensor data from multiple sensors comprises data from the gyroscope and the accelerometer, and wherein the sensor output refinement vector describes a refined sensor output value for the gyroscope and a refined sensor output value for the accelerometer.

4. The computing device of claim 1, 2 or 3, wherein the machine-learned sensor output refinement model comprises a deep recurrent neural network, and wherein inputting the sensor data into the machine-learned sensor output refinement model comprises inputting the sensor data into the deep recurrent neural network of the machine-learned sensor output prediction model.

5. The computing device of any one of claims 1 to 4, wherein the operations further comprise performing one or more actions associated with the refined outputs described by the sensor output refinement vector.

6. A method implemented by a computing device, the method comprising:
obtaining data descriptive of a machine-learned sensor output refinement model, wherein the sensor output refinement model has been trained to receive sensor data from multiple sensors, the sensor data from each sensor indicative of one or more measured parameters in the sensor's physical environment, recognize correlations among sensor outputs of the multiple sensors, and in response to receipt of the sensor data from multiple sensors, output refined sensor output values;
obtaining the sensor data from the multiple sensors, the sensor data descriptive of one or more measured parameters in each sensor's physical environment, wherein obtaining the sensor data from the multiple sensors comprises iteratively obtaining a time-stepped sequence of T sensor data vectors for N different sensors such that each of the T sensor data vectors has N dimensions, each dimension corresponding to sensor data for one of the N different sensors;
inputting the sensor data into the neural network of the sensor output refinement model, wherein inputting the sensor data into the sensor output refinement model comprises iteratively inputting each of the plurality of sensor data vectors into the sensor output refinement model as they are iteratively obtained; and
receiving, as an output of the sensor output refinement model, a sensor output refinement vector that describes respective refined sensor output values for the multiple sensors, the refined sensor output values being refined values for the obtained sensor data and providing improved measures, relative to the original sensor data, of the one or more measured parameters, wherein receiving, as an output of the sensor output refinement model, a sensor output refinement vector comprises iteratively receiving a plurality of sensor output refinement vectors as outputs of the sensor output refinement model, wherein each sensor output refinement vector is for M different sensors such that each of the sensor output refinement vectors has M dimensions, each dimension corresponding to a refined sensor output value for one of the M different sensors.

7. The method of claim 6, wherein the computing device comprises a mobile computing device, wherein the mobile computing device further comprises one or more motion sensors, and wherein the operations further comprise activating a component of the mobile computing device based at least in part on the one or more refined sensor output values.

8. The method of claim 6 or 7, wherein the computing device comprises a mobile computing device, wherein the mobile computing device further comprises a gyroscope and an accelerometer, wherein the sensor data from multiple sensors comprises data from the gyroscope and the accelerometer, and wherein the sensor output refinement vector describes a refined sensor output value for the gyroscope and a refined sensor output value for the accelerometer.

9. The method of claim 6, 7 or 8, wherein the machine-learned sensor output refinement model comprises a deep recurrent neural network, and wherein inputting the sensor data into the machine-learned sensor output refinement model comprises inputting the sensor data into the deep recurrent neural network of the machine-learned sensor output prediction model.

10. The method of any one of claims 6 to 9, wherein the operations further comprise performing one or more actions associated with the refined outputs described by the sensor output refinement vector.

11. One or more computer-readable media storing computer-readable instructions that when executed by one or more processors cause the one or more processors to perform operations comprising a method as defined in any one of claims 6 to 10.

## Patentansprüche

1. Rechenvorrichtung, die verfeinerte Sensorausgabewerte aus mehreren Sensoreingaben bestimmt, umfassend:
mindestens einen Prozessor; und
mindestens ein computerlesbares Medium, das Anweisungen speichert, die bei Ausführung durch den mindestens einen Prozessor den mindestens einen Prozessor veranlassen, Operationen durchzuführen, wobei die Operationen Folgendes umfassen:
Erlangen von Daten, die ein maschinengelerntes Sensorausgabe-Verfeinerungsmodell beschreiben, wobei das Sensorausgabe-Verfeinerungsmodell darauf trainiert wurde, Sensordaten von mehreren Sensoren zu empfangen, wobei die Sensordaten von jedem Sensor einen oder mehrere gemessene Parameter in der physischen Umgebung des Sensors angeben, Korrelationen zwischen Sensorausgaben der mehreren Sensoren zu erkennen und als Reaktion auf das Empfangen der Sensordaten von mehreren Sensoren verfeinerte Sensorausgabewerte auszugeben;
Erlangen der Sensordaten von den mehreren Sensoren, wobei die Sensordaten einen oder mehrere gemessene Parameter in der physischen Umgebung jedes Sensors beschreiben, wobei das Erlangen der Sensordaten von den mehreren Sensoren iteratives Erlangen einer zeitlich abgestuften Sequenz von T Sensordatenvektoren für N verschiedene Sensoren umfasst, sodass jeder der T Sensordatenvektoren N Dimensionen aufweist, wobei jede Dimension den Sensordaten für einen der N verschiedenen Sensoren entspricht;
Eingeben der Sensordaten in das neuronale Netz des Sensorausgabe-Verfeinerungsmodells, wobei das Eingeben der Sensordaten in das Sensorausgabe-Verfeinerungsmodell iteratives Eingeben jedes der Vielzahl von Sensordatenvektoren in das Sensorausgabe-Verfeinerungsmodell umfasst, sobald sie iterativ erlangt werden;
Empfangen eines Sensorausgabe-Verfeinerungsvektors, der jeweilige verfeinerte Sensorausgabewerte für die mehreren Sensoren beschreibt, als eine Ausgabe des Sensorausgabe-Verfeinerungsmodells, wobei die verfeinerten Sensorausgabewerte verfeinerte Werte für die erlangten Sensordaten sind und relativ zu den ursprünglichen Sensordaten verbesserte Messwerte des einen oder der mehreren gemessenen Parameter bereitstellen, wobei das Empfangen eines Sensorausgabe-Verfeinerungsvektors als Ausgabe des Sensorausgabe-Verfeinerungsmodells iteratives Empfangen einer Vielzahl von Sensorausgabe-Verfeinerungsvektoren als Ausgaben des Sensorausgabe-Verfeinerungsmodells umfasst, wobei jeder Sensorausgabe-Verfeinerungsvektor für M verschiedene Sensoren bestimmt ist, sodass jeder der Sensorausgabe-Verfeinerungsvektoren M Dimensionen aufweist, wobei jede Dimension einem verfeinerten Sensorausgabewert für einen der M verschiedenen Sensoren entspricht.

2. Rechenvorrichtung nach Anspruch 1, wobei die Rechenvorrichtung eine mobile Rechenvorrichtung umfasst, wobei die mobile Rechenvorrichtung ferner einen oder mehrere Bewegungssensoren umfasst, und wobei die Operationen ferner Aktivieren einer Komponente der mobilen Rechenvorrichtung mindestens teilweise auf Grundlage des einen oder der mehreren verfeinerten Sensorausgabewerte umfassen.

3. Rechenvorrichtung nach Anspruch 1 oder 2, wobei die Rechenvorrichtung eine mobile Rechenvorrichtung umfasst, wobei die mobile Rechenvorrichtung ferner ein Gyroskop und einen Beschleunigungsmesser umfasst, wobei die Sensordaten von mehreren Sensoren Daten von dem Gyroskop und dem Beschleunigungsmesser umfassen, und wobei der Sensorausgabe-Verfeinerungsvektor einen verfeinerten Sensorausgabewert für das Gyroskop und einen verfeinerten Sensorausgabewert für den Beschleunigungsmesser beschreibt.

4. Rechenvorrichtung nach Anspruch 1, 2 oder 3, wobei das maschinengelernte Sensorausgabe-Verfeinerungsmodell ein tiefes rekurrentes neuronales Netz umfasst, und wobei das Eingeben der Sensordaten in das maschinengelernte Sensorausgabe-Verfeinerungsmodell Eingeben der Sensordaten in das tiefe rekurrente neuronale Netz des maschinengelernten Sensorausgabe-Vorhersagemodells umfasst.

5. Rechenvorrichtung nach einem der Ansprüche 1 bis 4, wobei die Operationen ferner Durchführen einer oder mehrerer Aktionen umfassen, die den verfeinerten Ausgaben zugeordnet sind, die durch den Sensorausgabe-Verfeinerungsvektor beschrieben werden.

6. Verfahren, das durch eine Rechenvorrichtung umgesetzt wird, wobei das Verfahren Folgendes umfasst:
Erlangen von Daten, die ein maschinengelerntes Sensorausgabe-Verfeinerungsmodell beschreiben, wobei das Sensorausgabe-Verfeinerungsmodell darauf trainiert wurde, Sensordaten von mehreren Sensoren zu empfangen, wobei die Sensordaten von jedem Sensor einen oder mehrere gemessene Parameter in der physischen Umgebung des Sensors angeben, Korrelationen zwischen Sensorausgaben der mehreren Sensoren zu erkennen und als Reaktion auf das Empfangen der Sensordaten von mehreren Sensoren verfeinerte Sensorausgabewerte auszugeben;
Erlangen der Sensordaten von den mehreren Sensoren, wobei die Sensordaten einen oder mehrere gemessene Parameter in der physischen Umgebung jedes Sensors beschreiben, wobei das Erlangen der Sensordaten von den mehreren Sensoren iteratives Erlangen einer zeitlich abgestuften Sequenz von T Sensordatenvektoren für N verschiedene Sensoren umfasst, sodass jeder der T Sensordatenvektoren N Dimensionen aufweist, wobei jede Dimension den Sensordaten für einen der N verschiedenen Sensoren entspricht;
Eingeben der Sensordaten in das neuronale Netz des Sensorausgabe-Verfeinerungsmodells, wobei das Eingeben der Sensordaten in das Sensorausgabe-Verfeinerungsmodell iteratives Eingeben jedes der Vielzahl von Sensordatenvektoren in das Sensorausgabe-Verfeinerungsmodell umfasst, sobald sie iterativ erlangt werden; und
Empfangen eines Sensorausgabe-Verfeinerungsvektors, der jeweilige verfeinerte Sensorausgabewerte für die mehreren Sensoren beschreibt, als eine Ausgabe des Sensorausgabe-Verfeinerungsmodells, wobei die verfeinerten Sensorausgabewerte verfeinerte Werte für die erlangten Sensordaten sind und relativ zu den ursprünglichen Sensordaten verbesserte Messwerte des einen oder der mehreren gemessenen Parameter bereitstellen, wobei das Empfangen eines Sensorausgabe-Verfeinerungsvektors als Ausgabe des Sensorausgabe-Verfeinerungsmodells iteratives Empfangen einer Vielzahl von Sensorausgabe-Verfeinerungsvektoren als Ausgaben des Sensorausgabe-Verfeinerungsmodells umfasst, wobei jeder Sensorausgabe-Verfeinerungsvektor für M verschiedene Sensoren bestimmt ist, sodass jeder der Sensorausgabe-Verfeinerungsvektoren M Dimensionen aufweist, wobei jede Dimension einem verfeinerten Sensorausgabewert für einen der M verschiedenen Sensoren entspricht.

7. Verfahren nach Anspruch 6, wobei die Rechenvorrichtung eine mobile Rechenvorrichtung umfasst, wobei die mobile Rechenvorrichtung ferner einen oder mehrere Bewegungssensoren umfasst, und wobei die Operationen ferner Aktivieren einer Komponente der mobilen Rechenvorrichtung mindestens teilweise auf Grundlage des einen oder der mehreren verfeinerten Sensorausgabewerte umfassen.

8. Verfahren nach Anspruch 6 oder 7, wobei die Rechenvorrichtung eine mobile Rechenvorrichtung umfasst, wobei die mobile Rechenvorrichtung ferner ein Gyroskop und einen Beschleunigungsmesser umfasst, wobei die Sensordaten von mehreren Sensoren Daten von dem Gyroskop und dem Beschleunigungsmesser umfassen, und wobei der Sensorausgabe-Verfeinerungsvektor einen verfeinerten Sensorausgabewert für das Gyroskop und einen verfeinerten Sensorausgabewert für den Beschleunigungsmesser beschreibt.

9. Verfahren nach Anspruch 6, 7 oder 8, wobei das maschinengelernte Sensorausgabe-Verfeinerungsmodell ein tiefes rekurrentes neuronales Netz umfasst, und wobei die Eingabe der Sensordaten in das maschinengelernte Sensorausgabe-Verfeinerungsmodell Eingeben der Sensordaten in das tiefe rekurrente neuronale Netz des maschinengelernten Sensorausgabe-Vorhersagemodell umfasst.

10. Verfahren nach einem der Ansprüche 6 bis 9, wobei die Operationen ferner Durchführen einer oder mehrerer Aktionen umfassen, die den verfeinerten Ausgaben zugeordnet sind, die durch den Sensorausgabe-Verfeinerungsvektor beschrieben werden.

11. Ein oder mehrere computerlesbare Medien, die computerlesbare Anweisungen speichern, die bei Ausführung durch einen oder mehrere Prozessoren den einen oder die mehreren Prozessoren veranlassen, Operationen durchzuführen, die ein nach einem der Ansprüche 6 bis 10 definiertes Verfahren umfassen.

## Revendications

1. Dispositif informatique qui détermine des valeurs de sortie de capteur raffinées à partir de plusieurs entrées de capteur, comprenant :
au moins un processeur ; et
au moins une mémoire lisible par ordinateur stockant des instructions qui, lorsqu'elles sont exécutées par l'au moins un processeur, amènent l'au moins un processeur à réaliser des opérations, les opérations comprenant :
l'obtention de données descriptives d'un modèle de raffinement de sortie de capteur appris par machine, dans lequel le modèle de raffinement de sortie de capteur a été formé pour recevoir des données de capteur provenant de plusieurs capteurs, les données de capteur de chaque capteur indiquant un ou plusieurs paramètres mesurés dans l'environnement physique du capteur, reconnaître des corrélations entre les sorties de capteur des plusieurs capteurs, et en réponse à la réception des données de capteur provenant de plusieurs capteurs, produire des valeurs de sortie de capteur raffinées ;
l'obtention des données de capteur à partir des plusieurs capteurs, les données de capteur décrivant un ou plusieurs paramètres mesurés dans l'environnement physique de chaque capteur, dans lequel l'obtention des données de capteur à partir des plusieurs capteurs comprend l'obtention itérative d'une séquence à pas de temps de T vecteurs de données de capteur pour N capteurs différents de sorte que chacun des T vecteurs de données de capteur présente N dimensions, chaque dimension correspondant aux données de capteur pour l'un des N capteurs différents ;
l'entrée des données de capteur dans le réseau neuronal du modèle de raffinement de sortie de capteur, dans lequel l'entrée des données de capteur dans le modèle de raffinement de sortie de capteur comprend l'entrée itérative de chacun de la pluralité de vecteurs de données de capteur dans le modèle de raffinement de sortie de capteur au fur et à mesure qu'ils sont obtenus de manière itérative ;
la réception, en tant que sortie du modèle de raffinement de sortie de capteur, d'un vecteur de raffinement de sortie de capteur qui décrit des valeurs de sortie de capteur raffinées respectives pour les plusieurs capteurs, les valeurs de sortie de capteur raffinées étant des valeurs raffinées pour les données de capteur obtenues et fournissant des mesures améliorées, par rapport aux données de capteur d'origine, de l'un ou des plusieurs paramètres mesurés, dans lequel la réception, en tant que sortie du modèle de raffinement de sortie de capteur, d'un vecteur de raffinement de sortie de capteur comprend la réception itérative d'une pluralité de vecteurs de raffinement de sortie de capteur en tant que sorties du modèle de raffinement de sortie de capteur, dans lequel chaque vecteur de raffinement de sortie de capteur est pour M capteurs différents de sorte que chacun des vecteurs de raffinement de sortie de capteur présente M dimensions, chaque dimension correspondant à une valeur de sortie de capteur raffinée pour l'un des M capteurs différents.

2. Dispositif informatique selon la revendication 1, dans lequel le dispositif informatique comprend un dispositif informatique mobile, dans lequel le dispositif informatique mobile comprend également un ou plusieurs capteurs de mouvement, et dans lequel les opérations comprennent également l'activation d'un composant du dispositif informatique mobile sur la base au moins en partie de l'une ou des plusieurs valeurs de sortie de capteur raffinées.

3. Dispositif informatique selon la revendication 1 ou 2, dans lequel le dispositif informatique comprend un dispositif informatique mobile, dans lequel le dispositif informatique mobile comprend également un gyroscope et un accéléromètre, dans lequel les données de capteur provenant de plusieurs capteurs comprennent des données provenant du gyroscope et de l'accéléromètre, et dans lequel le vecteur de raffinement de sortie de capteur décrit une valeur de sortie de capteur raffinée pour le gyroscope et une valeur de sortie de capteur raffinée pour l'accéléromètre.

4. Dispositif informatique selon la revendication 1, 2 ou 3, dans lequel le modèle de raffinement de sortie de capteur appris par machine comprend un réseau neuronal récurrent profond, et dans lequel l'entrée des données de capteur dans le modèle de raffinement de sortie de capteur appris par machine comprend l'entrée des données de capteur dans le réseau neuronal récurrent profond du modèle de prédiction de sortie de capteur appris par machine.

5. Dispositif informatique selon l'une quelconque des revendications 1 à 4, dans lequel les opérations comprennent également la réalisation d'une ou de plusieurs actions associées aux sorties raffinées décrites par le vecteur de raffinement de sortie de capteur.

6. Procédé mis en œuvre par un dispositif informatique, le procédé comprenant :
l'obtention de données descriptives d'un modèle de raffinement de sortie de capteur appris par machine, dans lequel le modèle de raffinement de sortie de capteur a été formé pour recevoir des données de capteur provenant de plusieurs capteurs, les données de capteur de chaque capteur indiquant un ou plusieurs paramètres mesurés dans l'environnement physique du capteur, reconnaître des corrélations entre des sorties de capteur des plusieurs capteurs, et en réponse à la réception des données de capteur provenant de plusieurs capteurs, produire des valeurs de sortie de capteur raffinées ;
l'obtention des données de capteur à partir des plusieurs capteurs, les données de capteur décrivant un ou plusieurs paramètres mesurés dans l'environnement physique de chaque capteur, dans lequel l'obtention des données de capteur à partir des plusieurs capteurs comprend l'obtention itérative d'une séquence à pas de temps de T vecteurs de données de capteur pour N capteurs différents de sorte que chacun des T vecteurs de données de capteur présente N dimensions, chaque dimension correspondant aux données de capteur pour l'un des N capteurs différents ;
l'entrée des données de capteur dans le réseau neuronal du modèle de raffinement de sortie de capteur, dans lequel l'entrée des données de capteur dans le modèle de raffinement de sortie de capteur comprend l'entrée itérative de chacun de la pluralité de vecteurs de données de capteur dans le modèle de raffinement de sortie de capteur au fur et à mesure qu'ils sont obtenus de manière itérative ; et
la réception, en tant que sortie du modèle de raffinement de sortie de capteur, d'un vecteur de raffinement de sortie de capteur qui décrit des valeurs de sortie de capteur raffinées respectives pour les plusieurs capteurs, les valeurs de sortie de capteur raffinées étant des valeurs raffinées pour les données de capteur obtenues et fournissant des mesures améliorées, par rapport aux données de capteur d'origine, de l'un ou des plusieurs paramètres mesurés, dans lequel la réception, en tant que sortie du modèle de raffinement de sortie de capteur, d'un vecteur de raffinement de sortie de capteur comprend la réception itérative d'une pluralité de vecteurs de raffinement de sortie de capteur en tant que sorties du modèle de raffinement de sortie de capteur, dans lequel chaque vecteur de raffinement de sortie de capteur est pour M capteurs différents de sorte que chacun des vecteurs de raffinement de sortie de capteur présente M dimensions, chaque dimension correspondant à une valeur de sortie de capteur raffinée pour l'un des M capteurs différents.

7. Procédé selon la revendication 6, dans lequel le dispositif informatique comprend un dispositif informatique mobile, dans lequel le dispositif informatique mobile comprend également un ou plusieurs capteurs de mouvement, et dans lequel les opérations comprennent également l'activation d'un composant du dispositif informatique mobile sur la base au moins en partie de l'une ou des plusieurs valeurs de sortie de capteur raffinées.

8. Procédé selon la revendication 6 ou 7, dans lequel le dispositif informatique comprend un dispositif informatique mobile, dans lequel le dispositif informatique mobile comprend également un gyroscope et un accéléromètre, dans lequel les données de capteur provenant de plusieurs capteurs comprennent des données provenant du gyroscope et de l'accéléromètre, et dans lequel le vecteur de raffinement de sortie de capteur décrit une valeur de sortie de capteur raffinée pour le gyroscope et une valeur de sortie de capteur raffinée pour l'accéléromètre.

9. Procédé selon la revendication 6, 7 ou 8, dans lequel le modèle de raffinement de sortie de capteur appris par machine comprend un réseau neuronal récurrent profond, et dans lequel l'entrée des données de capteur dans le modèle de raffinement de sortie de capteur appris par machine comprend l'entrée des données de capteur dans le réseau neuronal récurrent profond du modèle de prédiction de sortie de capteur appris par machine.

10. Procédé selon l'une quelconque des revendications 6 à 9, dans lequel les opérations comprennent également la réalisation d'une ou de plusieurs actions associées aux sorties raffinées décrites par le vecteur de raffinement de sortie de capteur.

11. Un ou plusieurs supports lisibles par ordinateur stockant des instructions lisibles par ordinateur qui, lorsqu'elles sont exécutées par un ou plusieurs processeurs, amènent les un ou plusieurs processeurs à réaliser des opérations comprenant un procédé selon l'une quelconque revendications 6 à 10.
